# EUROPEAN PATENT SPECIFICATION

(11) **EP 3 485 466 B1**
(45) Date of publication and mention of the grant of the patent: **23.04.2025**
(21) Application number: 17827091.4
(22) Date of filing: 10.07.2017
(51) Int. Cl.: G06T 19/20, G06F 3/048, G06F 3/04815, G06F 3/04817

(54) **METHODS AND SYSTEMS FOR GENERATING AND DISPLAYING THREE DIMENSIONAL DIGITAL ASSETS FOR USE IN AN ONLINE ENVIRONMENT**
VERFAHREN UND SYSTEME ZUR ERZEUGUNG UND ANZEIGE VON DREIDIMENSIONALEN DIGITALEN ASSETS ZUR VERWENDUNG IN EINER ONLINE-UMGEBUNG
PROCÉDÉS ET SYSTÈMES DE GÉNÉRATION ET D'AFFICHAGE D'ACTIFS NUMÉRIQUES TRIDIMENSIONNELS DESTINÉS À ÊTRE UTILISÉS DANS UN ENVIRONNEMENT EN LIGNE

(30) Priority: 13.07.2016 US 201615209679; 13.07.2016 US 201615209688
(43) Date of publication of application: 22.05.2019
(73) Proprietor: Trivver, Inc., Huntington Beach, California 92648 (US)
(72) Inventor: LAMONTAGNE, Joel, Huntington Beach, California 92648 (US); KEATING, Simon, Aldershot Hampshire GU11 1NH (GB)
(74) Representative: Valet Patent Services Limited
(86) International application number: PCT/IB2017/054157
(87) International publication number: WO 2018/011703

(56) References cited:
- WO-A2-2006/016891
- US-A1- 2007 070 066
- US-A1- 2011 302 535
- US-A1- 2013 124 311
- AKIHIRO EGUCHI: "Smart Objects in a Virtual World", INQUIRY: THE UNIVERSITY OF ARKANSAS UNDERGRADUATE RESEARCH JOURNAL, 1 January 2010 (2010-01-01), pages 1 - 7, XP055651377, Retrieved from the Internet <URL:https://pdfs.semanticscholar.org/244f/4163487deebc23200c4d2852654ad9c5b9a9.pdf> [retrieved on 20191210]
- UNITY TECHNOLOGIES: "Unity - Manual: GameObject", UNITY MANUAL VERSION 5.3, 5 April 2016 (2016-04-05), XP055651354, Retrieved from the Internet <URL:https://web.archive.org/web/20160405025908/http://docs.unity3d.com:80/530/Documentation/Manual/class-GameObject.html> [retrieved on 20191210]
- UNITY TECHNOLOGIES: "Unity - Manual: Primitive and Placeholder Objects", UNITY MANUAL VERSION 5.3, 26 May 2016 (2016-05-26), XP055651357, Retrieved from the Internet <URL:https://web.archive.org/web/20160526135926/http://docs.unity3d.com/530/Documentation/Manual/PrimitiveObjects.html> [retrieved on 20191210]
- ANONYMOUS: "OpenRTB Dynamic Native Ads API, Specification Draft Version 1.1", 1 November 2015 (2015-11-01), pages 1 - 36, XP093143759, Retrieved from the Internet <URL:https://www.iab.com/wp-content/uploads/2016/01/OpenRTB-Native-Ads-Specification-Draft.pdf> [retrieved on 20240320]

## Description

### Cross Reference to Related Applications

This application claims priority from U.S. Patent Application No. 15/209,679, filed on July 13, 2016, titled "Methods And Systems For Generating Digital Smart Objects For Use In A Three Dimensional Environment," filed on July 13, 2016, and U.S. Patent Application No. 15/209,688, titled "Methods And Systems For Displaying Digital Smart Objects In A Three Dimensional Environment," filed on July 13, 2016.

### Technical Field

Embodiments of the present invention relates generally to the field of three dimensional environments. More particularly, embodiments of the invention relate to generation of three dimensional digital assets that can be used for data collection purposes, in a three dimensional environment, for advertisers, data analysts, developers, or educationalists/trainers in a variety of fields.

### Background of the Invention

Digital advertising currently requires creating specific and customized content (e.g., images, videos, text, etc.) for each advertiser individually, and placing them directly at various forms of digital platforms (e.g., websites, games, etc.). Furthermore, such advertising often relies on Hypertext Transfer Protocol (HTTP) based cookies. An HTTP cookie, also known as a web cookie or browser cookie, is data sent from a server and stored at a client's machine comprising information related to the user's choices so that only relevant ads are transmitted to the user. Conventionally, once the user visits a website/web-page, a third party cookie is saved locally at the client machine and each time the client revisits the webpage/website the cookie is transmitted back to the third party server. Furthermore, such systems require that the advertiser provide content for the advertisement, however, the advertiser has no control where or how the content would be displayed, except for providing keywords to the advertising system.

US 2013/124311 describes systems and methods for dynamic integration of advertisements in 3D virtual environments. The advertising assets may include 3D models of products or advertisements. The selection of appropriate advertising assets during runtime may be dependent on context-sensitive metadata associated with placeholders tagged in the virtual environment by a virtual environment authoring application, and corresponding metadata associated with available advertising assets.

However, such advertising systems often result in ineffective advertising due to the inherent limitations of keyword based advertising. Furthermore, fake or mistaken clicks occur regularly, which are further detrimental to the advertiser's interest. Such systems have no means of determining, in advance, if its advertising at a publisher's digital platform would generate in meaningful results. Thus, conventional advertising platforms often result in wasteful and inefficient advertising. Therefore, efficient systems, methods, and techniques are needed that allow a developer, publisher, or advertiser to overcome these limitations without the use of cookies. Such systems should further permit the developer or publisher to provide information that can help an advertiser determine the intended audience of the publisher's content.

### Summary of Invention

Using various embodiments, a system to generate a three-dimensional (3D) digital smart object for use in an 3D environment, a computer readable medium and method are disclosed.

In one embodiment the present invention provides a digital smart object generation system to generate a three-dimensional (3D) digital smart object for use in an 3D environment, comprising a hardware processing system coupled to a memory device, the hardware processing system configured to:
- present a 3D placeholder to a publisher of the 3D environment via an Application Programing Interface (API) or a Software Development Kit (SDK) of the digital smart object generation system, characterised in that the publisher uploads an asset to use as a 3D geometrical representation of 3D digital smart object, wherein the asset can be a generic 3D representation of geometric data, and wherein the asset within the 3D placeholder provides a visual representation of the 3D digital smart object to be generated;
- receive standard asset size information of the asset within the 3D placeholder, the standard asset size information of the asset including an X-axis, Y-axis, and Z-axis dimension of the asset, and wherein the 3D digital smart object is associated with a maximum and minimum polygon count value, asset positioning information, and wherein 3D digital smart object can also be associated with standard object size dimensions;
- receive the maximum and minimum polygon count value;
- receive asset data, the asset data including asset category and asset type associated to the asset;
- receive an asset positioning information, the asset positioning information including an anchor location and an asset orientation, wherein the anchor location being at least one of the X-axis, Y-axis, Z-axis, or a combination thereof, of the 3D placeholder and wherein the asset orientation is the desired orientation of the asset selected by publisher;
- store digital smart object data, including the asset, standard asset size information, asset positioning information, the maximum and minimum polygon count value, and asset data in a repository; and
- generate the 3D digital smart object by using the digital smart object data;
wherein the 3D digital smart object can be placed within the 3D environment and wherein the 3D digital smart object collects data related to user interaction or viewability with the 3D digital smart object.

In one embodiment the hardware processing system is further configured to generate the 3D digital smart object by associating the digital smart object data with event triggers, wherein the event triggers are capable of determining user interaction with the 3D digital smart object, characterised in that the event triggers transmits data based on the user interaction that can be used to generate user viewability or interaction based metrics.

In one embodiment, at least one event trigger can be configured by the publisher, and wherein at least another of the event trigger can be configured by an advertiser.

In another embodiment, the event triggers transmit user interaction including determining at least one of a user looking at the 3D smart object, the user interacting with the 3D smart object, a distance between the user and the 3D smart object, a percentage size of the 3D smart object in relationship to the size of the user interface, the percentage of the 3D smart object that was viewed on the user's screen, or a period of time that the user interacted with the 3D smart object.

In other embodiment, the asset being a generic 3D representation of geometric data, wherein the asset within the 3D placeholder provides a visual representation of the 3D digital smart object.

In one embodiment, an advertiser can replace the asset with a branded object, the branded object related to a brand associated with the advertiser, and wherein the branded object can replace the asset only when the branded object has a polygon count within the defined minimum and maximum polygon count value, the minimum and maximum polygon count value defined by a publisher.

In one embodiment, the publisher can further identify the types of different branded objects that can replace the asset based on an asset category and asset type.

The system can further be configured to receive standard asset size information of the asset in a 3D space, the standard asset size information including an X-axis, Y-axis, and Z-axis dimension of the asset, characterised in that the standard asset size information provides the maximum 3D size of the asset relative to the 3D placeholder, and wherein the standard asset size information is determined when at least one of the X-axis, Y-axis, or Z-axis dimension of the asset equals to its corresponding axis dimension of the 3D placeholder.

In yet another embodiment, the present invention provides computer readable medium storing instructions which when executed by a data processing system cause the data processing system to perform a method of using the system as disclosed above.

Further, in another embodiment, the present invention provides a method of using the system as disclosed above.

### Brief Description of Drawings

The present invention is illustrated by way of example and not limitation in the figures of the accompanying drawings in which like references indicate similar elements.
FIG. 1 illustrates a block diagram of a general system architecture that can generate and implement 3D digital smart objects to process advertising related relevant information, according to one embodiment of the present invention.
FIG. 2 illustrates a block diagram of generating a 3D digital smart object, according to one embodiment of the present invention.
FIG. 3 illustrates a block diagram of the generation of a 3D digital smart object while providing a horizontal orientation, according to one embodiment of the present invention.
FIG. 4 illustrates a block diagram of the data associated with a 3D digital smart object, according to one embodiment of the present invention.
FIG. 5 illustrates a block diagram of a system that generates 3D digital smart objects, according to an embodiment of the present invention.
FIG. 6 illustrates the asset positioning anchor of 3D digital smart objects, according to one embodiment of the present invention.
FIG. 7 illustrates a flow chart of a method by a system to generate a 3D digital smart object, according to one embodiment of the present invention.
FIG. 8 illustrates a flow chart of a method implemented by a client machine to generate a 3D digital smart object, according to one embodiment of the present invention.
FIG. 9 illustrates a flow chart of generating a branded digital smart object from a generic digital smart object by a system, according to one embodiment of the present invention.
FIG. 10 is a block diagram illustrating a data processing system such as a computing system which can be used with an embodiment of the present invention.
FIG. 11 illustrates displaying a 3D digital smart object in a three dimensional environment by a publisher, according to one embodiment of the present invention.
FIG. 12 illustrates describing the operations of a system implementing a 3D digital smart object in a three dimensional environment, according to one embodiment of the present invention.
FIG. 13 illustrates the operations of an advertiser replacing a generic asset of a 3D digital smart object with a branded asset, according to one embodiment of the present invention.
FIG. 14 illustrates the implementation of a branded 3D digital smart object in a three dimensional environment, according to one embodiment of the present invention.
FIG. 15 illustrates a block diagram describing a 3D digital smart object processing system receiving data from a three dimensional environment, according to one embodiment of the present invention.
FIG. 16 illustrates the operations of displaying a 3D digital smart object in a game development environment.
FIG. 17 illustrates the operations of receiving user engagement actions related to a 3D digital smart object by a 3D digital smart object placement system, according to one embodiment of the present invention.
FIG. 18 illustrates the operations of receiving user engagement data by a 3D digital smart object processing system, according to one embodiment of the present invention.

### Description of Embodiments

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to "one embodiment" or "an embodiment" or "another embodiment" means that a particular feature, structure, or characteristic described in conjunction with the embodiment can be included in at least one embodiment of the invention. The appearances of the phrase "in one embodiment" in various places in the specification do not necessarily all refer to the same embodiment. The processes depicted in the figures that follow are performed by processing logic that comprises hardware (e.g., circuitry, dedicated logic, etc.), software, or a combination of both. Although the processes are described below in terms of some sequential operations, it should be appreciated that some of the operations described can be performed in a different order. Moreover, some operations can be performed in parallel rather than sequentially.

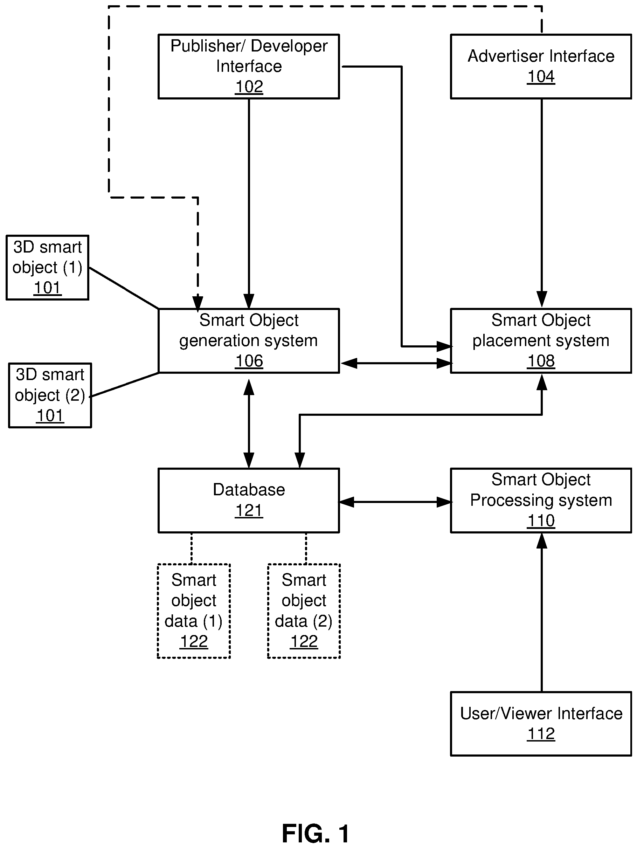

FIG. 1 illustrates a block diagram of a general system architecture that can generate and implement 3D digital smart objects to process advertising related relevant information, according to one embodiment of the present invention. As illustrated, publisher or developer can, using publisher interface 102, request the digital smart object generation system 106 to create 3D digital smart object 101, as described further herein. The digital smart object generation system 106 can request the publisher's input to provide digital smart object data 122, and save it in database 121. Digital smart object generation system 106 can interact with the developer using various 3D environments (e.g., games, Virtual Reality environments, Augmented Reality environments, Smartphone Applications ("Apps"), Digital TV (OTT), Web Interfaces, Game Consoles, Videos, etc.). Generally, a 3D environment intending to implement the techniques described herein would need to provide SDK(s), API(s), or any other means using which digital smart object generation system can interact with the 3D environment's development interface. Thus, in one embodiment, publisher interface 102 can be a game development environment (e.g., Unity^{®} engine, Unreal^{®} engine, Adobe^{®} Air, etc.). In another embodiment, publisher interface 102 can be any 3D development environment, as known to a person having ordinary skill in the art. However, it should be noted, the invention described herein is not intended to be limited to any particular 3D development environment.

After 3D digital smart object 101 has been generated, the publisher can request the 3D digital smart object 101 be placed in an 3D environment by requesting the digital smart object placement system 108, using a SDK or API set provided to the developer by the 3D environment. In another embodiment, a system administrator of the digital smart object generation system 106 can generate predetermined digital smart objects that can be directly placed by the developer using digital smart object placement system 108. Generally, digital smart object placement system 108 can be any computing engine that can interact with a 3D environment and determine the location (within the environment) where the 3D digital smart object has been placed by the developer/publisher, and save it as placement data. Digital smart object placement system 108 can further associate the placement data of 3D digital smart object 101 in a 3D environment with 3D environment identification data that identifies the digital platform using 3D digital smart object 101. In one embodiment, 3D digital smart object can be a GSO. After 3D digital smart object 101 is placed in the 3D environment, an advertiser, in one embodiment, using advertiser interface 104 can interact directly with digital smart object generation system 106 (represented with dashed line in Fig. 1) to replace the publisher provided asset with a branded asset to generate a BSO. In another embodiment, advertiser interface 104 can indirectly interact with digital smart object generation system 106 via digital smart object placement system 108. In yet another embodiment, the developer/publisher can provide the system with a branded asset (instead of a generic asset) to generate a BSO.

After the placement of 3D digital smart object 101 into the 3D environment, user interaction or viewability based metrics generated from 3D digital smart object 101 can be generated via digital smart object processing system 110. In one embodiment, digital smart object processing system 110 can be any system that is capable of analyzing information received from 3D digital smart object 101 and generate metrics related to any user interaction, including tapping, touching, moving, viewing (e.g., from a distance), requesting detailed description, etc., of mart object 101, via user interface 112. The generated metrics can be useful to advertiser and/or publisher associated with the 3D environment.

Various exemplary embodiments of implementing 3D digital smart object 101 in a 3D environment, are disclosed in U.S. Patent Application No. 15/209,688, filed concurrently with the instant application, can be employed, in whole or in part, with the present invention.

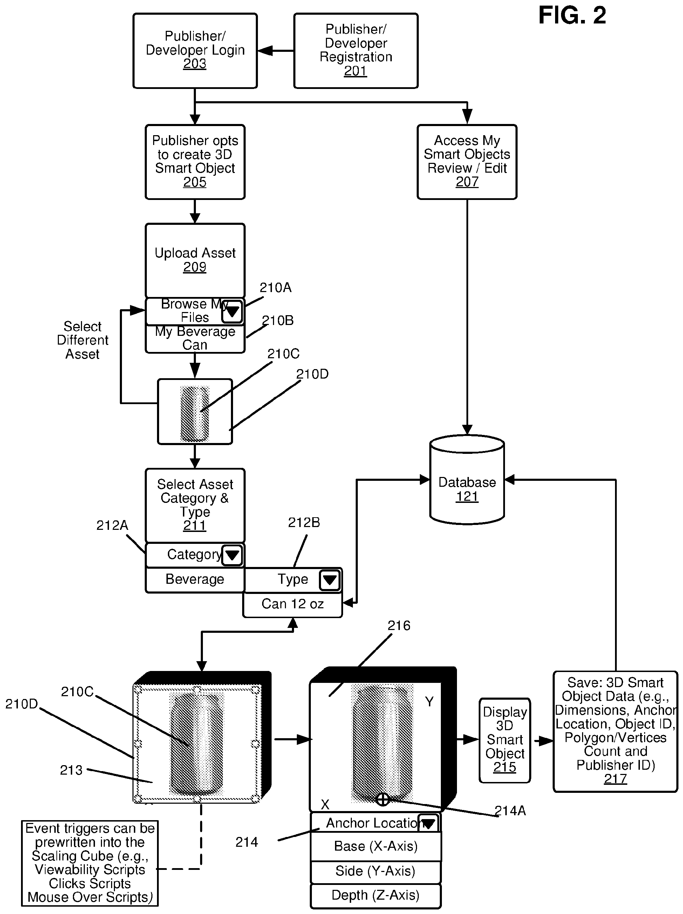

FIG. 2 illustrates a block diagram of generating a 3D digital smart object by a publisher associated with a 3D environment, according to one embodiment of the present invention. In one embodiment, as illustrated at 201, the publisher registers with the digital smart object generation system. At 203, the publisher logs in to generate 3D digital smart object 101 for use in an 3D environment and a 3D placeholder can be presented to the publisher. At 205, publisher selects to create 3D digital smart object 101 and a 3D placeholder is presented to the publisher via an API or SDK of the digital smart object generation system 106. At 209, the publisher uploads an asset to use as a 3D geometrical representation of 3D digital smart object 101. The asset in one embodiment, can be a generic 3D representation of geometric data, and the asset within the 3D placeholder provides a visual representation of the 3D digital smart object to be generated. For example, in one embodiment, the user can browse files 210A, and then select an asset 210B (e.g., beverage can), as the intended representation object of 3D digital smart object 101. In one embodiment, once digital smart object generation system 106 receives asset 210C from the publisher, asset 210C is previewed inside a 3D placeholder 210D to the publisher. At 211, the developer is given the opportunity to provide an asset category and/or type that would be associated with the uploaded asset. The asset category and/or type, can also be used for cataloging 3D digital smart object 101. For example, in one embodiment, at 212A, the publisher can select asset data, including an asset type category as 'beverage' and at 212B the asset type, in this embodiment, can be a 'beverage can'. In an alternative embodiment, the developer/ publisher can also provide a minimum and maximum polygon count of the asset. Such standardization can be assist the publisher to ensure only the intended resolution and or size of the asset is used, in case the asset is replaced by a branded asset. This standardization also ensures that the branded asset, if it replaces an asset in a GSO, preserves the quality and load time as intended by the developer/publisher of the GSO. In one embodiment, the developer/publisher can upload a branded asset to directly create a BSO. The selected asset along with asset data (including asset category and asset type related to the asset), and/or minimum/maximum asset polygon count value, as provided by the publisher/developer, is received by digital smart object generation system 106. In one embodiment, the minimum and maximum asset polygon count value is optional, and in certain embodiments, a polygon count value based constraint may not be required at all. The system then associates the asset with an asset identification in database 121.

Thereafter, as illustrated at 213, the publisher is requested to provide a standard asset size information of asset 210C located in 3D placeholder 210D. In one embodiment, the standard asset size information that includes an X-axis, Y-axis, and Z-axis dimension of the asset (as intended to represent 3D digital smart object 101). An asset generally provides the visual representation of 3D digital smart object 101. In one embodiment, the standard size information of asset 210C can be provided by the publisher by clicking on asset 210C, and dragging the asset boundary markers to maximize the size of asset 210C within 3D placeholder 210D. This usually means at least one dimension (X-axis, Y-axis, or Z-axis) of asset 210C is equal to the corresponding axis of 3D placeholder 210D. This creates a standard object size for the associated asset category and/or asset type. In one embodiment, 3D Digital smart object 101 encompasses asset 210C in a transparent 3D placeholder cube 210D, where the 3D placeholder cube 210D dictates the maximum XYZ dimensions of an object that takes up a specific space in a 3D environment.

As illustrated as 216, the system requests the publisher to provide asset position information of 3D digital smart object 101, in one embodiment. The asset positioning information includes an anchor positioning location 214 and an asset orientation (not shown). The anchor positioning location, in one embodiment, can be the X-axis coordinates, Y-axis coordinates, Z-axis coordinates, or a combination thereof, of the 3D placeholder; the asset orientation is the desired orientation of the asset selected by publisher. For example, as illustrated in fig. 2, asset 210C is illustrated to have a vertical orientation and the asset anchor positioning location 214A is shown to be located on the X-axis. In one embodiment, the anchor positioning location determines how the asset is positioned within 3D environments. Anchor positioning location 214 indicated as X-axis signifies that the asset is grounded or the determined orientation is relative to the X-axis in the 3D environment. Anchor positioning location 214 indicated as Y-axis signifies that the asset is grounded or the determined orientation is relative to the Y-axis in the 3D environment. Anchor positioning location 214 indicated as a combination of X-axis coordinate, Y-axis coordinate, and Z-axis coordinate values of the 3D placeholder can signify, in one embodiment that the asset anchor is hanging within the 3D placeholder. Similarly, an orientation position of the asset can be selected with respect to the axis of the 3D placeholder. In yet another embodiment, the asset orientation can be requested from the publisher after providing the standard asset size information at 213. As illustrated at 215, the system displays 3D digital smart object data 101 to the user, and at 217 saves and associates the digital smart object data received from the publisher, including the asset, standard asset size information, asset positioning information, and asset data in repository 121. After 3D digital smart object data is saved, the publisher can edit or review the data, as illustrated at 207. In one embodiment, the 3D digital smart object can now be placed within an 3D environment and associated with data collection activities that measure the user's response, viewability, and/or interaction with the 3D digital smart object.

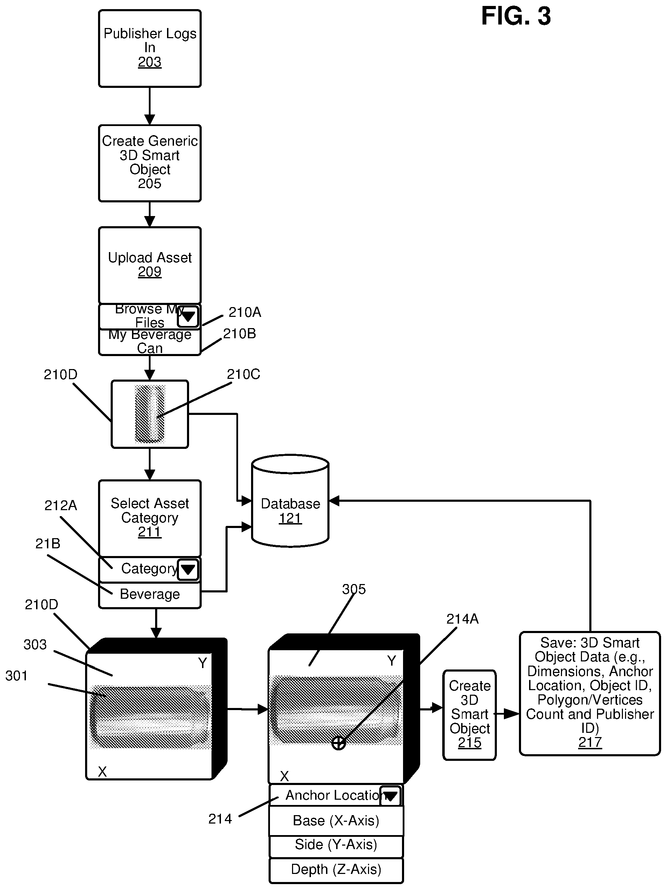

FIG. 3 illustrates a block diagram of the generation of a 3D digital smart object while providing a horizontal orientation, according to one embodiment of the present invention. As illustrated in fig. 2, in one embodiment, at 203, the publisher logs in to generate 3D digital smart object 101 for use in an 3D environment. At 205, publisher selects to create 3D digital smart object 101. At 209, the publisher uploads an asset to use as a 3D geometrical representation of 3D digital smart object 101. For example, in one embodiment, the user can browse files 210A, and then select an asset 210B (e.g., beverage can), as the intended representation object of 3D digital smart object 101. In one embodiment, once digital smart object generation system 106 receives asset 210C from the publisher, asset 210C is previewed inside a 3D placeholder 210D to the publisher. At 211, the developer is given the opportunity to provide an asset category and/or type that would be associated with the uploaded asset. The asset category and/or type, can also be used for cataloging 3D digital smart object 101. For example, in one embodiment, at 212A, the publisher can select asset data, including an asset type category as 'beverage' and at 212B the asset type, in this embodiment, can be a 'beverage can'. At 303, the publisher can change the orientation of asset 210C, as represented by horizontally oriented asset 301. At 305, the publisher can determine the asset anchor position location, and the system can thereby save digital smart object data as described above while discussing fig. 2.

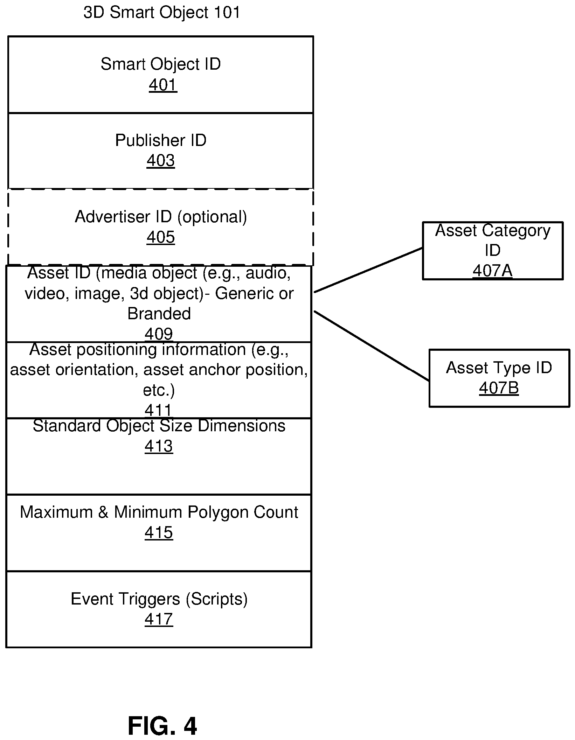

FIG. 4 illustrates a block diagram of the data associated with a 3D digital smart object, according to one embodiment of the present invention. As illustrated 3D digital smart object 101, in one embodiment, can be associated with digital smart object identification data 401,that represents the identification of the 3D digital smart object when implemented by the publisher and can be associated with digital smart object data stored in repository 121. 3D digital smart object 101 can also be associated with publisher identification data 403 identifying the publisher who implemented the 3D digital smart object. Such identification can be helpful to assist in presenting a game developer digital smart objects only related to their associated 3D digital smart objects, since 3D digital smart objects can be configured, in one embodiment, to collect viewability metrics and transmit it back to the publisher implementing the 3D digital smart object in their 3D environment. In an alternative embodiment, 3D digital smart object 101 can also be associated with advertiser identification 405 that can be used when a GSO asset is replaced with a branded asset to generate a BSO. By associating 3D digital smart object 101 with advertiser identification 405, advertising based metrics can be transmitted to the advertiser. Although the techniques described herein are generally associated with data collection for advertisers, it should be noted, the invention generally relates to data collection using 3D digital smart objects, and is not intended to be limited for advertising purposes. Specifically, generation of 3D digital smart objects can be used for data collection purposes, in a three dimensional environment, for advertisers, data analysts, software developers (e.g., object performances in game or application development, etc.), or for training purposes in a variety of fields (e.g., medical, military, or any area that involves precision based training using a 3D environment). The data collected by the digital smart objects can then be used for data analysis to determine if a goal has been achieved. In yet another embodiment, the data analysis can be used for predictive advertisement. The goal can be different based on the field where the 3D digital smart objects are used. For example, in the advertising realm the goal can include user interaction and/or viewability with the 3D digital smart object, in medicinal or military training related tasks the goal can include determining the precise interaction (e.g., orientation, speed, etc.) the 3D digital smart object with the user, etc. In the realm of virtual reality, for example, a user's interaction with the 3D digital smart object can be measured with use of accelerometers, gyroscopes, scripts or a combination thereof. Therefore, advertiser identification 405 can be associated with any 3rd party (who is not the publisher/developer) of the 3D digital smart object, but as a requirement to collect data from the end user's viewability or interaction with the digital smart object. For example, advertising identification data 405 can be associated with a medical training services provider, military training service provider, etc. depending on the usage of the 3D digital smart object. In one embodiment, data received from the 3D digital smart object can inform the user of their performance score/level.

3D digital smart object 101 can also be associated with asset identification 409 which determines the asset representation(s) (e.g. video, image, 3D object, audio, or a combination thereof) of the 3D digital smart object. In one embodiment, Asset identification 409 can also identify if 3D digital smart object 101 is a GSO or BSO, that is, if the asset object/video/3D representation comprises a generic asset or a branded asset. Asset identification 409 can be further associated with asset category identification 407A and/or Asset type identification 407B. In one embodiment, the publisher, while generating 3D digital smart object 101, is given a list of predetermined asset categories and/or asset type from which the publisher selects a desired category or type to associated with 3D digital smart object 101. Assigning an asset category and/or type can be useful while generating a BSO (from a GSO) because it can provide the advertiser the publisher's intended representation of 3D digital smart object 101. For example, if the publisher generates a GSO and assigns it to category 'beverage', and type 'soda can', this would suggest that a GUCCI^{®} 'leather studded sandal' is not intended to be the branded asset of the GSO. Therefore, in one embodiment, providing an asset category and/or type can prevent ineffective advertising by informing the advertiser the intended representation of 3D digital smart object 101. Further, asset category and type can also provide the advertiser information about the intended audience of 3D digital smart object 101, since a 'soda can' based branded 3D digital smart object is more likely going to be considered appropriate to a general audience, while a leather studded sandal based branded 3D digital smart object is more likely to be considered suitable to a feminine audience between the ages of 25-50. Thus, by providing an asset category and/ or asset type, the publisher can further identify one or more categories/types of different branded objects that are intended to replace the asset in a GSO.

As illustrated in fig. 4, 3D digital smart object 101 can also be associated with asset positioning information (e.g., asset orientation, asset anchor position, etc.) 411 and standard object size dimensions 413, as disclosed above, herein. Further, 3D digital smart object 101 can also be associated with a maximum and/or minimum polygon count value 415. In one embodiment, when a publisher is in the process of generating 3D digital smart object 101, the publisher/developer can specify a minimum and/or maximum polygon count value 415 of the 3D asset that would be included in 3D digital smart object 101. ). In this embodiment, an advertiser can replace the asset of a GSO with a branded object, where the branded object is related to a brand associated with the advertiser. In this embodiment, once the publisher defines a minimum and maximum polygon count value for the asset associated the 3D digital smart object (GSO), and a branded object/asset can replace the publisher provided asset only when the branded object has a polygon count within the defined minimum and maximum polygon count value. This can be helpful, among other things, to ensure fast loading 3D digital smart object 101 when it is implemented in a 3D environment. As polygon count value of a 3D asset can be directly associated with the size of the asset (in memory), setting a minimum and/or maximum polygon can assist in fast loading (or rendering) of 3D digital smart object 101 during implementation. Further, setting minimum/maximum polygon count 415 can assist the publisher in ensuring the aesthetic aspect of the 3D digital smart object is not compromised when an asset is replaced (e.g., when a GSO asset is replaced with a branded asset to convert the GSO into a BSO.

Further, 3D digital smart object 101 can also be associated with event triggers (e.g., scripts) 417. In one embodiment, the event triggers are capable of determining user interaction with, or viewability of, the 3D digital smart object. Event scripts 117, in one embodiment, can transmit data to the system that can be used to generate user viewability or interaction based metrics. In another embodiment, the event triggers transmit user interaction including determining a user looking at the 3D digital smart object, the user interacting with the 3D digital smart object, a distance between the user and the 3D digital smart object, a percentage size of the 3D digital smart object in relationship to the size of the user interface, a period of time that the user interacted with the 3D digital smart object, the percentage of the smart object seen from the user, the angle with which the 3D digital smart object was moved or lifted by the user, or the speed with which the 3D digital smart object was moved by the user, etc. Non-limiting examples of event triggers can include the events as illustrated below in table 1:

**Table 1**

| **Event Trigger** | **Purpose** |
|---|---|
| OnClicked(); | Triggers whenever the digital smart object is tapped or clicked |
| GetScreenRealEstate(); | Gets screen real estate at current time and stores in array for calculating averages of the time the user could view the 3D digital smart object |
| IsInView(); | Various calculations to determine whether object is in view using ray casts to main camera (user focus). If actual geometry determination is not performed, this can, in one embodiment, be determined by collision detection so determination can be based on probability. |
| OpenDetails(); | Provide details of the information associated with the digital smart object (e.g., in a pop-up window). |
| ObjectAngle(); | Relative angle with which the user is interacting with the digital smart object |
| UserSpeed(); | The relative speed (pixel traversed per seconds) with which a user is moving the digital smart object |

In one embodiment, digital smart objects can also include a collision mesh (e.g., in gaming environments), which can be used to detect event triggers. Thus, digital smart objects, in one embodiment, can be used to calculate if an object is visible to a user, and if so, the percentage of the smart object viewable on the user's screen. For example, digital smart objects implemented in a gaming environment (where a collision mesh can be implemented) can determine if a mesh renderer is active, and further evaluate if a digital smart object is being drawn on the current Camera's culling mask. Thereafter, using ray casting techniques, a line between the main camera and the digital smart object can be drawn. If this line collides with a collidable mesh of the digital smart object then it can be assumed that the digital smart object is being blocked (and is viewable on the user's interface). To calculate the proportion of the digital smart object on screen, in a gaming environment, a screen bounds function (or equivalent) can be used to obtain an approximation (percentage) of the screen that the digital smart object is covering. In other environments (e.g., non-gaming environments) similar techniques can be implemented, as known to a person having ordinary skill in the art.

A person having ordinary skill in the art would appreciate that other event triggers can also be implemented, depending on the business needs of the advertiser/service provider, and/or publisher. Thus, in another embodiment, other functions specific to individual digital smart objects can also be specified (e.g., other multimedia effects within the 3D digital environment can be effected). In one embodiment, 3D digital smart object 101 can be configured to transmit the data generated by the event triggers to a digital smart object manager which can forward the information to one or more systems for metrics generation and/or further processing. In one embodiment, event triggers can be configured or customized by the publisher or advertiser/service provider, depending on their business needs. In yet another embodiment, event triggers cannot be configured or customized by the publisher or advertiser/service provider, in order to prevent advertisement metrics, viewability/interaction fraud with the 3D digital smart object. In such an embodiment, event trigger scripts can be encrypted and provided by 3D digital smart object generator 106. In this embodiment, a developer and/or advertiser can present a request to the system to generate event trigger scripts that can be customized by the developer/publisher, or can request the system to create entirely new event trigger scripts to meet specific data reporting needs of the publisher.

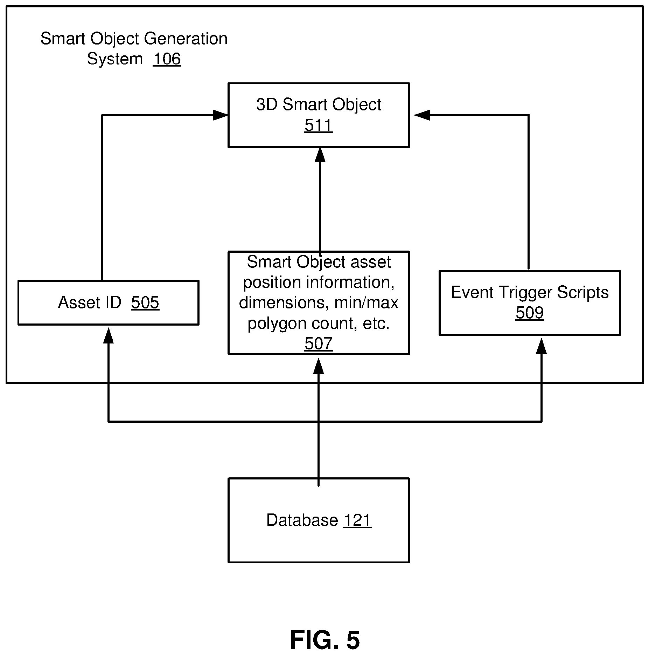

FIG. 5 illustrates a block diagram of a system that generates 3D digital smart objects, according to an embodiment of the present invention. In one embodiment, based on any digital smart object ID, Digital smart object generation system 106 can retrieve digital smart object data (from database 121), including asset information related to the 3D digital smart object from an associated asset ID 505, digital smart object position information, dimensions, min/max polygon count, etc. 507, and associated event trigger scripts 509. After gathering the digital smart object data, digital smart object generation system can generate (as disclosed herein) a 3D digital smart object to be implemented in various 3D environments.

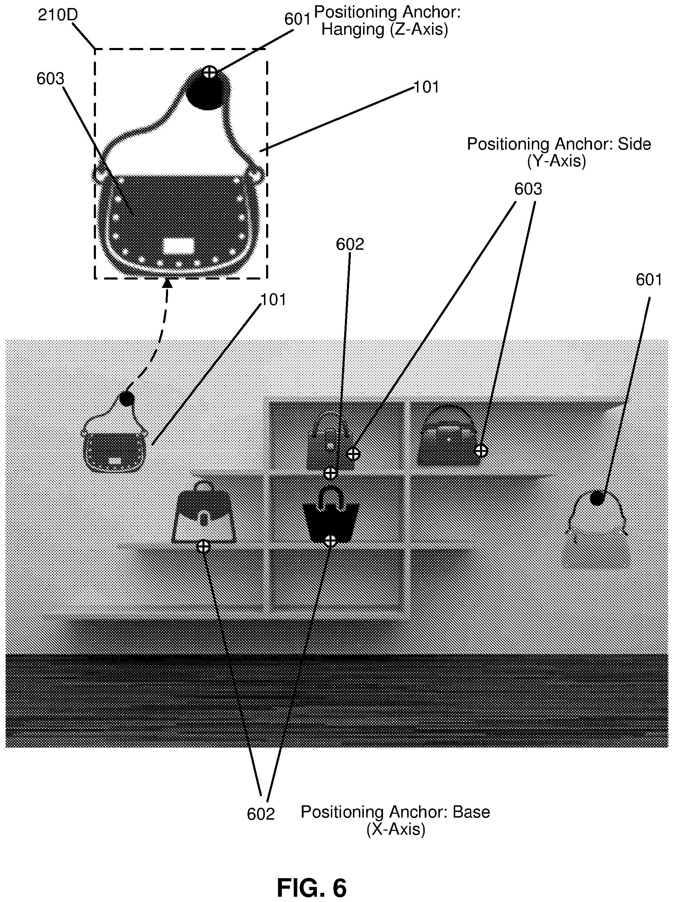

FIG. 6 illustrates the asset positioning anchor of 3D digital smart objects, according to one embodiment of the present invention. As illustrated, various 3D digital smart objects 101 implemented in a 3D environment are displayed. In one embodiment, 3D digital smart object 101 can, once implemented in the 3D environment, display asset 603 with its positioning based on the defined asset position anchor 214. Position anchor, as illustrated, can be in a hanging position 601 relative to 3D placeholder 210D, anchored to the base 602 of 3D placeholder 210D, anchored to the side 603 or placeholder 210D, or a combination thereof.

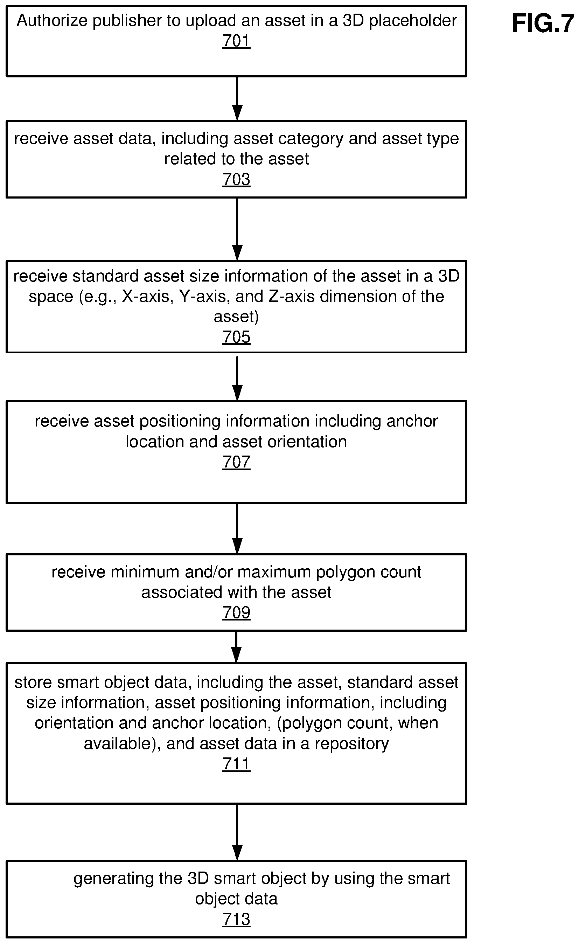

FIG. 7 illustrates a flow chart of a method by a system to generate a 3D digital smart object, according to one embodiment of the present invention. As illustrated, at 701, a system implementing the method includes authorizing a publisher to upload an asset in a 3D placeholder. At 703, the system receives asset data, including asset category and asset type related to the asset. At 705, the system can further be configured to receive standard asset size information of the asset in a 3D space (e.g., X-axis, Y-axis, and Z-axis dimension of the asset). At 707, the system receives asset positioning information including anchor location and asset orientation. Thereafter, the system, at 709, receives minimum and/or maximum polygon count associated with the asset, and stores the digital smart object data received, including the asset, standard asset size information, asset positioning information ( anchor location and/or orientation), polygon count (when available), and asset data into the repository. At 713, the system can generate the 3D digital smart object by using the digital smart object data received from the publisher.

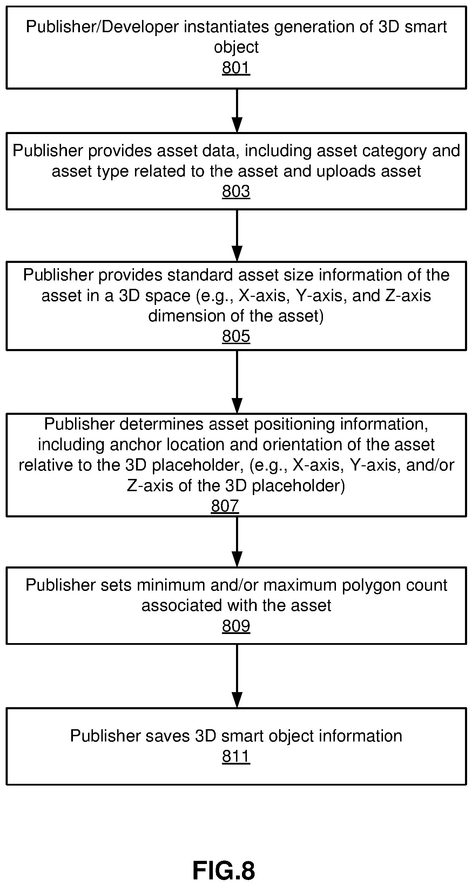

FIG. 8 illustrates a flow chart of a method implemented by a client machine to generate a 3D digital smart object, according to one embodiment of the present invention. As illustrated, a publisher/developer instantiates generation of 3D digital smart object, at 801. At 803, the publisher provides asset data, including asset category and asset type related to the asset and uploads asset. The publisher then provides, at 805, standard asset size information of the asset in a 3D space (e.g., X-axis, Y-axis, and Z-axis dimension of the asset). At 807, the publisher determines asset positioning information, including anchor location and orientation of the asset relative to the 3D placeholder, (e.g., X-axis coordinates, Y-axis coordinates, Z-axis coordnates, or a combination thereof of the 3D placeholder). The publisher can also set minimum and/or maximum polygon count associated with the asset, at 809, and then and 811, save 3D digital smart object information.

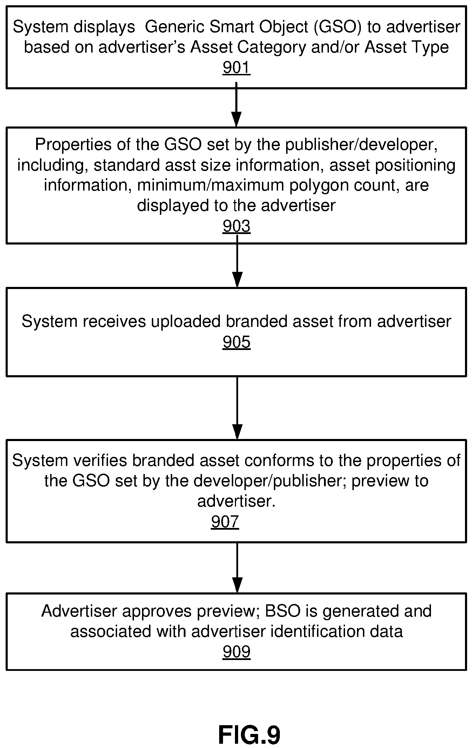

FIG. 9 illustrates a flow chart of generating a branded digital smart object from a generic digital smart object by a system, according to one embodiment of the present invention. As illustrated, the system, after an advertiser logs into the digital smart object generation system, in one embodiment, the system displays available Generic Digital smart objects (GSOs) to an advertiser based on advertiser's selected Asset Category and/or Asset Type, at 901. At 903, the properties of a GSO set by the publisher/developer, including, standard asset size information, asset positioning information, and/or minimum/maximum polygon count, are displayed to the advertiser. At 905, the system receives an uploaded branded asset from advertiser. At 907, the system verifies that the uploaded branded asset conforms to the properties of the GSO as set by the developer/publisher. At 900, the BSO is previewed to the advertiser and the BSO is associated with advertiser identification; the system then saves the associated data to the repository. Thereafter, once the GSO is implemented by a developer/publisher in a 3D environment, the BSO can be displayed instead of the GSO and transmit necessary data to a system capable of receiving the information (e.g., digital smart object processing system 110) to generate and process necessary metrics for the advertiser.

The techniques shown in the figures can be implemented using computer program instructions (computer code) and data stored and executed on one or more electronic systems (e.g., computer systems, etc.). Such electronic systems store and communicate (internally and/or with other electronic systems over a network) code and data using machine-readable media, such as machine-readable non-transitory storage media (e.g., magnetic disks; optical disks; random access memory; dynamic random access memory; read only memory; flash memory devices; phase-change memory). In addition, such electronic systems typically include a set of one or more processors coupled to one or more other components, such as one or more storage devices, user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device.

It should be apparent from this description that aspects of the present invention may be embodied, at least in part, in software. That is, the techniques may be carried out in a computer system or other computer system in response to its processor, such as a microprocessor, executing sequences of instructions contained in memory, such as a ROM, DRAM, mass storage, or a remote storage device. In various embodiments, hardware circuitry may be used in combination with software instructions to implement the present invention. Thus, the techniques are not limited to any specific combination of hardware circuitry and software nor to any particular source for the instructions executed by the computer system. In addition, throughout this description, various functions and operations are described as being performed by or caused by software code to simplify description. However, those skilled in the art will recognize what is meant by such expressions is that the functions result from execution of the code by a processor.

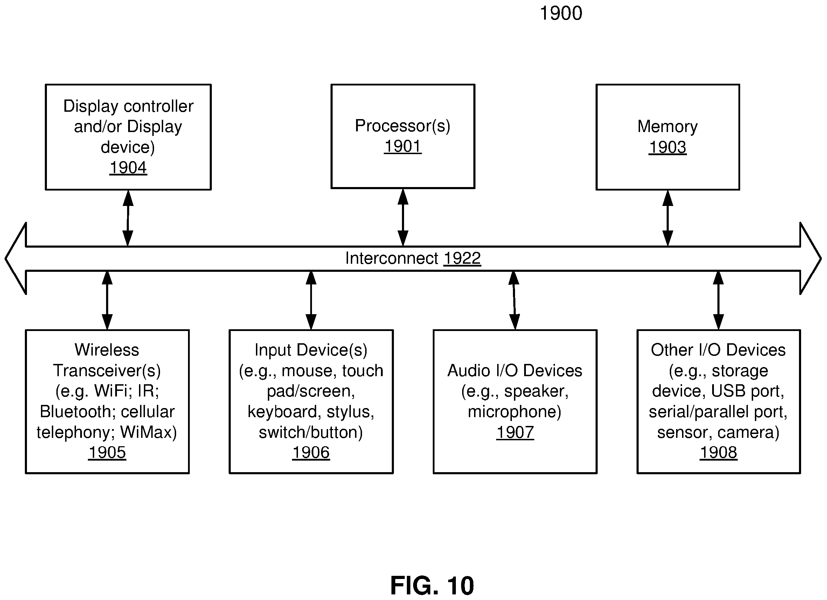

FIG. 10 is a block diagram illustrating a data processing system such as a computing system 1900 which may be used with one embodiment of the invention. For example, system 1900 may be implemented as part of a system that can at least generate 3D digital smart objects using the techniques described herein. In one embodiment, system 1900 may represent digital smart object generating system 106, digital smart object placement system 108, or digital smart object processing system 110. System 1900 may have a distributed architecture having dispersed units coupled through a network, or all of its components may be integrated into a single unit. Computing system 1900 may be implemented as part of a diverse range of products implemented by Trivver, Inc.

For example, computing system 1900 may represents any of data processing systems described above performing any of the processes or methods described above. System 1900 can include many different components. These components can be implemented as integrated circuits (ICs), portions thereof, discrete electronic devices, or other modules adapted to a circuit board such as a motherboard or add-in card of the computer system, or as components otherwise incorporated within a chassis of the computer system. Note also that system 1900 is intended to show a high level view of many components of the computer system. However, it is to be understood that additional or fewer components may be present in certain implementations and furthermore, different arrangement of the components shown may occur in other implementations. System 1900 may represent a desktop, a laptop, a tablet, a server, a mobile phone, a programmable logic controller, a personal digital assistant (PDA), a personal communicator, a network router or hub, a wireless access point (AP) or repeater, a set-top box, or a combination thereof.

In one embodiment, system 1900 includes processor 1901, memory 1903, and devices 1905-1908 via a bus or an interconnect 1922. Processor 1901 may represent a single processor or multiple processors with a single processor core or multiple processor cores included therein. Processor 1901 may represent one or more general-purpose processors such as a microprocessor, a central processing unit (CPU), or the like. More particularly, processor 1901 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. Processor 1901 may also be one or more special-purpose processors such as an application specific integrated circuit (ASIC), a cellular or baseband processor, a field programmable gate array (FPGA), a digital signal processor (DSP), a network processor, a graphics processor, a network processor, a communications processor, a cryptographic processor, a co-processor, an embedded processor, or any other type of logic capable of processing instructions.

Processor 1901, which may be a low power multi-core processor socket such as an ultra-low voltage processor, may act as a main processing unit and central hub for communication with the various components of the system. Such processor can be implemented as a system on chip (SoC). In one embodiment, processor 1901 may be an Intel^{®} Architecture Core^{™}-based processor such as an i3, i5, i19 or another such processor available from Intel Corporation, Santa Clara, Calif. However, other low power processors such as available from Advanced Micro Devices, Inc. (AMD) of Sunnyvale, Calif., an ARM-based design from ARM Holdings, Ltd. or a MIPS-based design from MIPS Technologies, Inc. of Sunnyvale, Calif., or their licensees or adopters may instead be present in other embodiments.

Processor 1901 is configured to execute instructions for performing the operations and methods discussed herein. System 1900 further includes a graphics interface that communicates with graphics subsystem 1904, which may include a display controller and/or a display device.

Processor 1901 may communicate with memory 1903, which in an embodiment can be implemented via multiple memory devices to provide for a given amount of system memory. As examples, the memory can be in accordance with a Joint Electron Devices Engineering Council (JEDEC) low power double data rate (LPDDR)-based design such as the current LPDDR2 standard according to JEDEC JESD 207-2E (published April 2007), or a next generation LPDDR standard to be referred to as LPDDR3 that will offer extensions to LPDDR2 to increase bandwidth. As examples, 2/4/8 gigabytes (GB) of system memory may be present and can be coupled to processor 1901 via one or more memory interconnects. In various implementations the individual memory devices can be of different package types such as single die package (SDP), dual die package (DDP) or quad die package (QDP). These devices can in some embodiments be directly soldered onto a motherboard to provide a lower profile solution, while in other embodiments the devices can be configured as one or more memory modules that in turn can couple to the motherboard by a given connector.

Memory 1903 can be a machine readable non-transitory storage medium such as one or more volatile storage (or memory) devices such as random access memory (RAM), dynamic RAM (DRAM), synchronous DRAM (SDRAM), static RAM (SRAM), or other types of storage devices such as hard drives and flash memory. Memory 1903 may store information including sequences of executable program instructions that are executed by processor 1901, or any other device. For example, executable code and/or data of a variety of operating systems, device drivers, firmware (e.g., input output basic system or BIOS), and/or applications can be loaded in memory 1903 and executed by processor 1901. An operating system can be any kind of operating systems, such as, for example, Windows^{®} operating system from Microsoft^{®}, Mac OS^{®}/iOS^{®} from Apple, Android^{®} from Google^{®}, Linux^{®}, Unix^{®}, or other real-time or embedded operating systems such as VxWorks.

System 1900 may further include IO devices such as devices 1905-1908, including wireless transceiver(s) 1905, input device(s) 1906, audio IO device(s) 19019, and other IO devices 1908. Wireless transceiver 1905 may be a WiFi transceiver, an infrared transceiver, a Bluetooth transceiver, a WiMax transceiver, a wireless cellular telephony transceiver, a satellite transceiver (e.g., a global positioning system (GPS) transceiver), or other radio frequency (RF) transceivers, network interfaces (e.g., Ethernet interfaces) or a combination thereof.

Input device(s) 1906 may include a mouse, a touch pad, a touch sensitive screen (which may be integrated with display device 1904), a pointer device such as a stylus, and/or a keyboard (e.g., physical keyboard or a virtual keyboard displayed as part of a touch sensitive screen). For example, input device 1906 may include a touch screen controller coupled to a touch screen. The touch screen and touch screen controller can, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen.

Audio IO device 1907 may include a speaker and/or a microphone to facilitate voice-enabled functions, such as voice recognition, voice replication, digital recording, and/or telephony functions. Other optional devices 1908 may include a storage device (e.g., a hard drive, a flash memory device), universal serial bus (USB) port(s), parallel port(s), serial port(s), a printer, a network interface, a bus bridge (e.g., a PCI-PCI bridge), sensor(s) (e.g., a motion sensor such as an accelerometer, gyroscope, a magnetometer, a light sensor, compass, a proximity sensor, etc.), or a combination thereof. Optional devices 1908 may further include an imaging processing subsystem (e.g., a camera), which may include an optical sensor, such as a charged coupled device (CCD) or a complementary metal-oxide semiconductor (CMOS) optical sensor, utilized to facilitate camera functions, such as recording photographs and video clips. Certain sensors may be coupled to interconnect 1907 via a sensor hub (not shown), while other devices such as a keyboard or thermal sensor may be controlled by an embedded controller (not shown), dependent upon the specific configuration or design of system 1900.

To provide for persistent storage of information such as data, applications, one or more operating systems and so forth, a mass storage (not shown) may also couple to processor 1901. In various embodiments, to enable a thinner and lighter system design as well as to improve system responsiveness, this mass storage may be implemented via a solid state device (SSD). However in other embodiments, the mass storage may primarily be implemented using a hard disk drive (HDD) with a smaller amount of SSD storage to act as a SSD cache to enable non-volatile storage of context state and other such information during power down events so that a fast power up can occur on RE-initiation of system activities. Also a flash device may be coupled to processor 1901, e.g., via a serial peripheral interface (SPI). This flash device may provide for non-volatile storage of system software, including a basic input/output software (BIOS) as well as other firmware of the system.

Note that while system 1900 is illustrated with various components of a data processing system, it is not intended to represent any particular architecture or manner of interconnecting the components; as such details are not germane to embodiments of the present invention. It will also be appreciated that network computers, handheld computers, mobile phones, and other data processing systems which have fewer components or perhaps more components may also be used with embodiments of the invention.

Thus, methods, apparatuses, and computer readable medium to generate 3D digital smart objects for implementation (or use) in a 3D environment. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative rather than a restrictive sense.

The description now replicates the contents of U.S. Patent Application No. 15/209,688 which is incorporated by reference herein.

Referring back to FIG. 1, FIG. 1 illustrates a block diagram of a general system architecture that can generate and implement 3D digital smart objects to process advertising related relevant information, according to one embodiment of the present invention. 3D digital smart objects, in one embodiment, can be used to generate generic content (banner/billboard, videos, and/or 3D assets) that can optionally be replaced with branded content from an advertiser within a variety of digital platforms and measure the user performance with both the generic and branded content across the digital platform. In one embodiment, a 3D digital smart object comprises an asset encompassed in a transparent 3D asset placeholder that dictates the maximum X-Axis, Y-Axis, and Z-Axis dimensions of an asset/object and/or and understands the scaling dimensions that takes up a specific shape in a 3D digital environment. The asset within the 3D asset placeholder provides a visual representation of the 3D digital smart object. The asset can be, in one embodiment, a 3D representation of geometric data, where the asset within the 3D asset placeholder provides a visual representation of the 3D digital smart object. A 3D digital smart object comprises an asset that can be any media content such as, 3D non-active assets, assets, video, audio, multi-media object, any general 3D representation of geometric data, or a combination thereof. In various embodiments, 3D digital smart objects can be used for services related to advertising, notification, or generally for any service that can personalize a viewer's environment with 3D content that is relevant to each viewer.

After 3D digital smart object 101 has been generated, it can be placed into a three dimensional environment by 3D digital smart object placement system 108.

As illustrated, publisher or developer can, using publisher interface 102, request the 3D digital smart object placement system 108 to place 3D digital smart object 101 in a three dimensional environment, as described further herein. 3D digital smart object placement system 108 can request the publisher's input to select a 3D digital smart object (generated by 3D digital smart object generation system 106) and save the coordinates, including game identification data, , smart object identification data, smart object category/type data, publisher/developer identification data, and location/scene identification data. 3D digital smart object placement system 108 can interact with the developer using various 3D game development environments. Generally, a 3D environment intending to implement the techniques described herein would need to provide SDK(s), API(s), or any other means using which 3D digital smart object placement system 108 can interact with the 3D environment's development interface. Thus, in one embodiment, publisher interface 102 can be a game development environment (e.g., Unity^{®} engine, Unreal^{®} engine, Torque 3D^{®} engine, Adobe^{®} Air, etc.). In another embodiment, publisher interface 102 can be any 3D development environment, as known to a person having ordinary skill in the art. However, it should be noted, the invention described herein is not intended to be limited to any particular 3D development environment. Therefore, 3D digital smart object 101 has been generated by 3D digital smart object generation system 106, the publisher can request the 3D digital smart object 101 be placed in an 3D environment by requesting the 3D digital smart object placement system 108, using a SDK or API set provided to the developer by the 3D environment.

In another embodiment, a system administrator of the 3D digital smart object placement system 108 can present predetermined 3D digital smart objects (to the developer) that can be placed within a three dimensional environment using 3D digital smart object placement system 108. Generally, 3D digital smart object placement system 108 can be any computing engine that can interact with a 3D environment and determine the location (within the environment) where the 3D digital smart object has been placed by the developer/publisher, and save it as placement data. 3D digital smart object placement system 108 can further associate the placement data of 3D digital smart object 101 in a 3D environment with 3D environment identification data that identifies the digital platform using 3D digital smart object 101. In one embodiment, the publisher or developer can place 3D digital smart object 101 as a GSO. In another embodiment, the publisher or developer can place 3D digital smart object 101 as a BSO. When the developer/publisher places a GSO in the 3D environment, an advertiser, in one embodiment, using advertiser interface 104 can interact with 3D digital smart object placement system 108 to replace the publisher provided asset with a branded asset to generate a BSO. In yet another embodiment, the developer/publisher can provide the system with a branded asset (instead of a generic asset) to generate a BSO, which is then placed by the developer using 3D digital smart object placement system 108.

After the placement of 3D digital smart object 101 into the 3D environment, user interaction or viewability based metrics generated from 3D digital smart object 101 can be generated via 3D digital smart object processing system 110. In one embodiment, 3D digital smart object processing system 110 can be any system that is capable of analyzing information received from 3D digital smart object 101 and generate metrics related to any user interaction, including tapping, touching, moving, time spent with the smart object, viewing (e.g., from a distance), requesting detailed description, etc., of smart object 101, via user interface 112. The generated metrics can be useful to advertiser and/or publisher associated with the 3D environment.

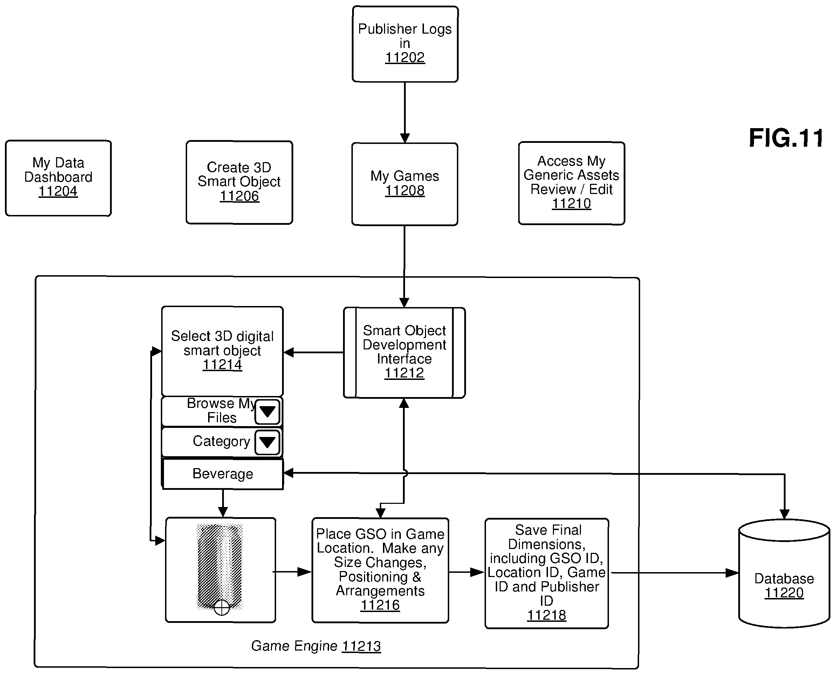

FIG. 11 illustrates displaying a 3D digital smart object in a three dimensional environment by a publisher, according to one embodiment of the present invention. As illustrated, at 11202 a publisher or game developer logs in to the gaming environment, via publisher interface 102, the 3D digital smart object implementation system can be accessed in a 3D digital smart object developer menu via an API or SDK installed within the gaming environment. Thereafter, the publisher/ game developer, in one embodiment, can select options like viewing their data dashboard 11204, where performances of their 3D digital smart objects can be viewed and reported, create 3D digital smart object 11206, access games they are developing (or contributing towards), or access 3D digital smart objects 101 generated by the developer or publisher. 3D digital smart objects created by the developer can be generic 3D digital smart objects (GSOs) or branded 3D digital smart objects (BSOs). Generic 3D digital smart objects are 3D digital smart objects in which the asset is a generic representation of an object, location or shape. Branded 3D digital smart objects are 3D digital smart objects in which the asset is a branded representation of an object or shape.

To implement a 3D digital smart object in a game, the developer can select a game under development, and via the game engine 11213, access 3D digital smart object development interface 11212. 3D digital smart object placement system 108 presents the developer an option to select a 3D digital smart object to be placed within the game, as illustrated at 11214. In one embodiment, the publisher/developer is prompted to select an asset category and/or type to narrow (or filter) the 3D digital smart objects visible to the developer/publisher. Generally, a publisher/developer can only select system provided 3D digital smart objects and/or 3D digital smart objects created by the developer/publisher (or their team). However, in another embodiment, a developer can opt to share their 3D digital smart objects within a group or make them publically accessible. After the publisher/developer selects a 3D digital smart object 3D digital smart object placement system 108, displays the selected 3D digital smart object asset in a 3D placeholder. In one embodiment, the 3D placeholder can be a cube. The 3D digital smart object placement system 108 also retrieves and transmits 3D digital smart object data associated with the displayed asset from an asset repository, associated with the asset category and/or asset type, the 3D digital smart object data including an asset, asset position anchor location, and standard asset size information of the asset in the 3D placeholder. The asset position anchor location determines the location of the asset relative to the 3D asset placeholder, while the asset orientation determines the orientation of the asset itself (e.g., vertical, horizontal, etc.); the asset position anchor location in one embodiment can be at least the X-axis, Y-axis, or Z-axis of the 3D asset placeholder. The asset position anchor location is the axis of the 3D asset placeholder that acts as a base axis for the asset (in other words, the asset's orientation is relative to the selected axis). The anchor location can be provided by the creator of the 3D digital smart object. The standard asset size information, in one embodiment, provides the maximum 3D size of the asset relative to the 3D placeholder, and includes an X-axis, Y-axis, and Z-axis dimension of the asset. The standard asset size information can be determined when at least one of the X-axis, Y-axis, or Z-axis dimension of the asset equals to its corresponding axis dimension of the 3D placeholder.

The publisher/developer can then place the 3D digital smart object at their desired location in the game scene (that is, the visible area of a scene in a game), and scale the 3D digital smart object relative to the game scene, as needed, as illustrated at 11216. In one embodiment, the developer can use the same 3D digital smart object and provide different scaling and positioning information, as further illustrated in fig. 5. At 11218, 3D digital smart object placement system 108 can then save the placement information in database 11220, including, size (scale) changes, positioning, and other arrangements to the database. 3D digital smart object placement system 108 can further associate the data with the game identification information, location (position within the game) identification information, 3D digital smart object identification data, and publisher identification information. The position location, in one embodiment, includes an X-axis, Y-axis, and Z-axis coordinates of a location within a scene of the online game where the 3D digital smart object is intended to be placed/ viewed by a player of the game. In one embodiment, the developer/publisher can override the asset position anchor location while placing the 3D digital smart object in a game. In this embodiment, the developer can transmit their preferred anchor location to 3D digital smart object placement system 108, which is associated with the game, position, and developer identification data and saved in database 11220. In one embodiment, the scaling information provides a factor for each coordinate of the 3D digital smart object; the factor determines the relative size of the 3D digital smart object in a game scene.

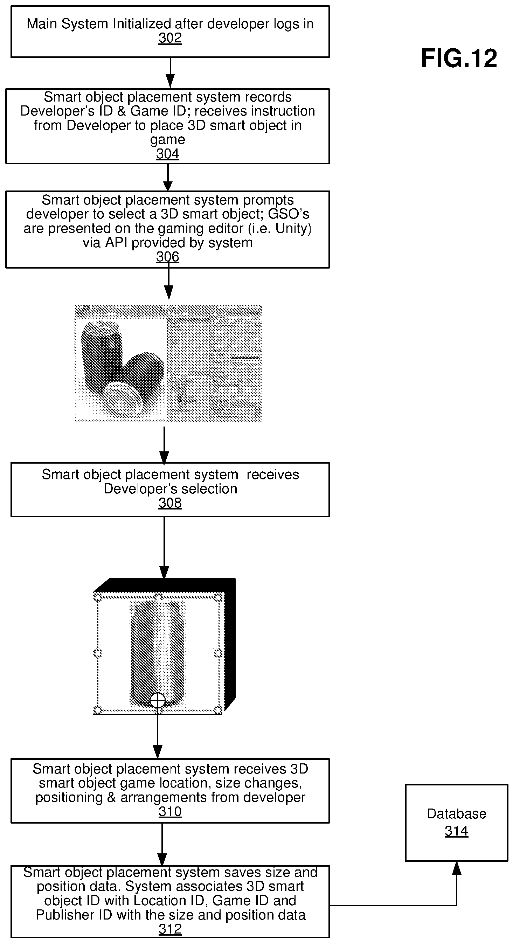

FIG. 12 illustrates describing the operations of a system implementing a 3D digital smart object in a three dimensional environment, according to one embodiment of the present invention. As illustrated, at 302, system 100 is initialized after the developer logs into the 3D game development environment. At 304, system records the developer's identification data and game identification data. When the developer provides an instruction to place a 3D digital smart object within the gaming environment, at 306, the 3D digital smart object placement system 108 prompts the developer to select a 3D digital smart object. The developer can then select a GSO or BSO, as illustrated above. In one embodiment, 3D digital smart objects are presented to the developer via the gaming developer interface/ editor (e.g., Unity) via API provided by system. At 308, system 108 receives developer's selection. At 310, 3D digital smart object placement system 108 receives 3D digital smart object game location, size changes, positioning & arrangements from the developer. At 312, 3D digital smart object placement system 108 saves size and position data, along with 3D digital smart object identification data, location identification data, game identification data, and publisher identification data in database 314. In one embodiment, in case the developer has positioned a GSO, an advertiser can use this data to target a GSO for asset replacement to convert the GSO into a BSO.

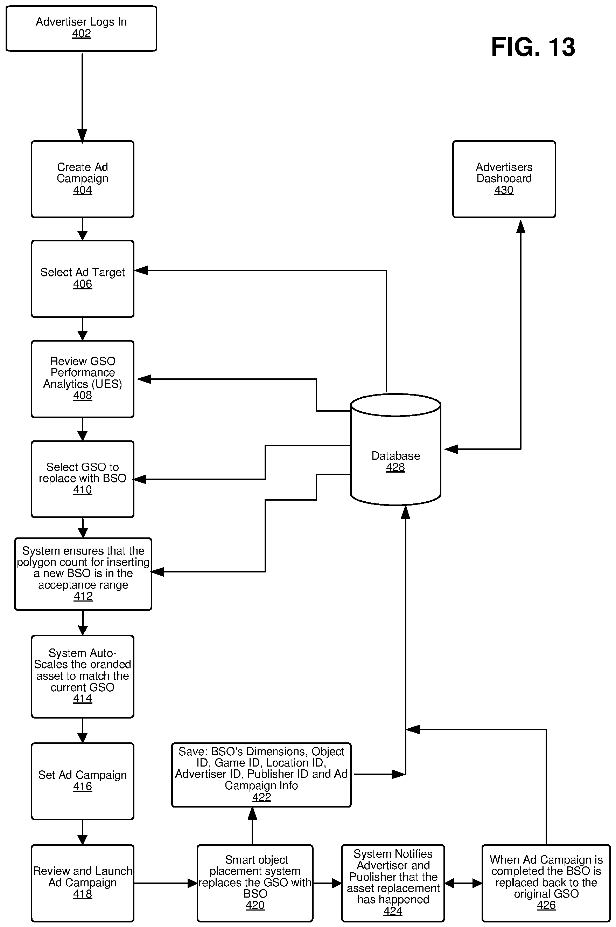

FIG. 13 illustrates the operations of an advertiser replacing a generic asset of a 3D digital smart object with a branded asset, according to one embodiment of the present invention. In one embodiment, 3D digital smart object 101 can be placed within a three dimensional environment and associated with advertisements that are to be analyzed, and wherein the 3D digital smart object can record different types of interaction of the 3D digital smart object with a user of the game and transmit user interaction information to the computing device. Advertisements can be placed by replacing a generic asset of a 3D digital smart object with a branded asset to convert a GSO to a BSO, in one embodiment, the advertiser logs in to system 100, as illustrated at 402. Thereafter, at 404, the advertiser creates at advertisement campaign. At 406, an advertisement target audience is selected by the advertiser. Based on the advertisement targeted audience, the developer presented an option to select an asset category and/or type related to which GSOs are displayed. After the advertiser selects an asset category and/or type, a list of GSOs are displayed to the advertiser. At 408, the advertiser can review each GSO's past performance analytics, and select a GSO asset to be replaced by a branded asset to convert a GSO to a BSO, as illustrated at 410. After the advertiser selects a GSO for replacement of the asset, the advertiser uploads the branded asset (e.g., Coca-Cola^{®} soda can) to replace the GSO asset (e.g., generic soda can). After the branded asset has been uploaded, 3D digital smart object placement system 108 can, in one embodiment, ensure that the uploaded branded asset is within the parameters set by the creator of the GSO as illustrated at 412. Parameters set by the creator of the GSO can be the 3D digital smart object data provided during the generation of the 3D digital smart object, including, the standard asset information, asset anchor location position, and/or a minimum/maximum polygon count value for the branded asset that can replace the GSO asset to generate a BSO. In one embodiment, defining a minimum and/or maximum polygon count value assists in generating an advertisement standard that can allow of a BSO to be generated programmatically by replacing a GSO asset with a branded asset. In another embodiment, the publisher can further identify the types of different branded objects that can replace the asset by identifying the asset category and/or asset type. In one embodiment, the 3D digital smart object data can further associated with publisher identification data associated with the developer. In another embodiment, the 3D digital smart object data can also be associated with advertiser identification data associated with an advertiser.

In one embodiment, based on the standard asset size information provided by the 3D digital smart object creator, the system can automatically scale the branded asset (of a BSO) to match the asset size of the GSO, as illustrated at 414. At 416, the advertiser can set the advertisement campaign and at 418, the advertiser can review and launch the advertisement campaign. At 420, 3D digital smart object placement system replaces the generic asset with the branded asset to convert the GSO into a BSO. At 422, the BSO's Dimensions, Object ID, Game ID, Location ID, Advertiser ID, Publisher ID and Ad Campaign Information are stored in database 428. In one embodiment, at 424, system 100 can notify the advertiser and/or publisher that the asset replacement has occurred. At 426, in one embodiment, when advertisement campaign is completed the BSO is replaced back to the original GSO in the online game.

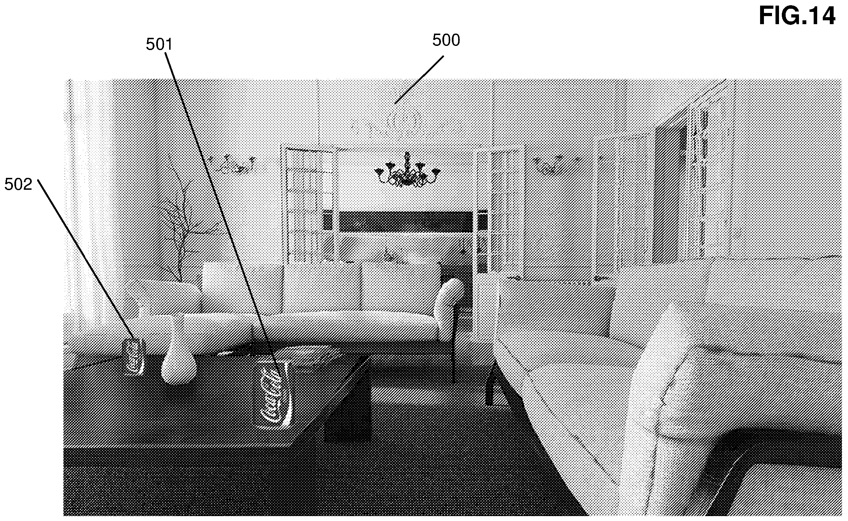

FIG. 14 illustrates the implementation of a branded 3D digital smart object in a three dimensional environment, according to one embodiment of the present invention. As illustrated, game scene 500 can include two BSOs, as depicted at Coca-Cola^{®} beverage cans. In one embodiment, the BSOs can either be placed in the game directly by the publisher/developer. In another embodiment, the developer places GSOs and an advertiser replaces the generic asset with branded assets to convert a GSO into a BSO, as illustrated. Since each 3D digital smart object in the system can be represented by a unique 3D digital smart object identification data, the same GSO can be placed at multiple locations within any number of online games. For example, as illustrated 3D digital smart object 501 and 3D digital smart object 502 can be implemented from one single 3D digital smart object created by a developer or provided by the system. Therefore, the parameters set by the creator of the 3D digital smart object (e.g., the standard asset information, asset anchor location position, and/or a minimum/maximum polygon count value, etc.) for both 3D digital smart object 501 and 3D digital smart object 502 can be same. However, during placement of the 3D digital smart objects, the developer can provide different scaling factors for each 3D digital smart object relative to the game scene, and the corresponding information can be saved by 3D digital smart object placement system for each location. Since each 3D digital smart object 501 and 3D digital smart object 502 implementation is different (but only shares parameters set by the developer), each 3D digital smart object 501 and 502 can transmit different user engagement metrics to system 100. Therefore, as illustrated, two 3D digital smart objects can be implemented using the same 3D digital smart object and share common parameters as defined/set by the creator of the 3D digital smart object.

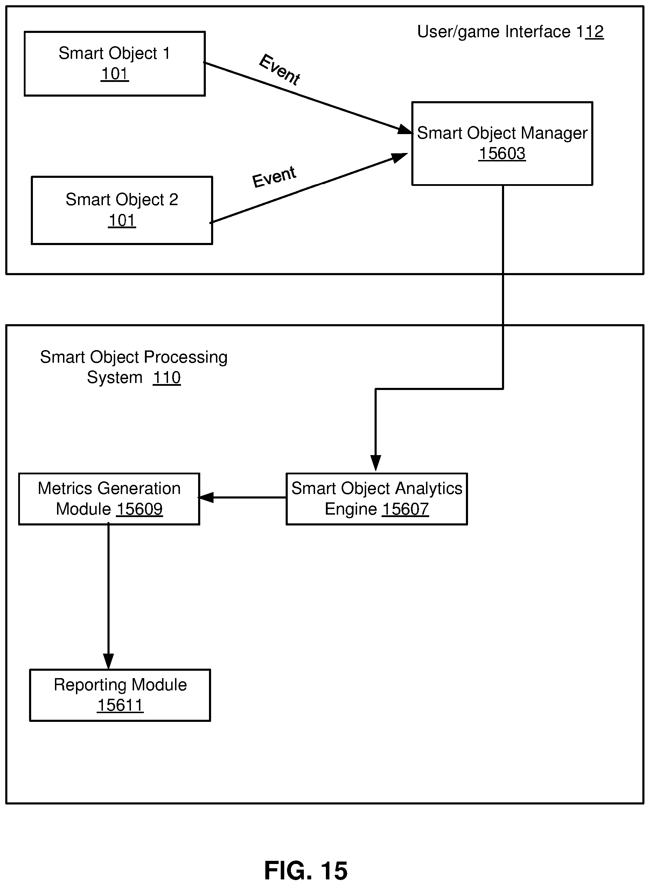

FIG. 15 illustrates a block diagram describing a 3D digital smart object processing system receiving data from a three dimensional environment, according to one embodiment of the present invention. In one embodiment, when a user/player is on a game scene via interface 112, the player can see 3D digital smart objects 101. The player can interact with the 3D digital smart objects, can choose to view them, or a combination thereof. Each 3D digital smart object 101 can be configured to record different types of interaction of 3D digital smart object 101 with a user/player of the game and transmit user interaction (or viewability) information to 3D digital smart object manager 15603, by employing event triggers. 3D digital smart object manager 15603 can then forward the information to 3D digital smart object processing system 110. In one embodiment, event triggers are capable of determining user interaction with, or viewability of, a 3D digital smart object and transmit metrics, based on the user interaction (or viewability), to a 3D digital smart object processing system. In one embodiment, the event triggers transmit user interaction including (but not limited to) determining a user viewing a 3D digital smart object, the user interacting with a 3D digital smart object, a distance between the user and a 3D digital smart object, a percentage size of a 3D digital smart object in relationship to the size of the user interface, a period of time that the user interacted with a 3D digital smart object, the percentage of the 3D digital smart object that was viewable on the user's screen (e.g., is the viewable surface of 3D digital smart object 50% below the screen), etc. In one embodiment, event triggers can be configured or customized by the implementer (developer/publisher) of the 3D digital smart object.

In one embodiment, 3D digital smart object manager 15603, can be the communication interface between 3D digital smart objects 101 and 3D digital smart object processing system 110. In one embodiment, 3D digital smart object manager 15603 resides in the game environment. 3D digital smart objects 101 and 3D digital smart object manager 15603 can be compiled within the gaming environment, thus become part of the game. 3D digital smart object manager receives all event triggers from various 3D digital smart objects within a game, and can periodically transmit the user engagement data to 3D digital smart object processing system 110 of system 100 (residing remotely from the gaming server, in one embodiment). 3D digital smart object processing system 110 can include a 3D digital smart object analytics engine 15607 that can analyze the data received from each 3D digital smart object 101. Based on the received data, 3D digital smart object analytics engine 15607 can transmit the data to a metrics generation module 15609 which keeps track of the viewability/ interaction of different users with the 3D digital smart object, collectively referred to as performance of the 3D digital smart object herein. This information can then be transmitted to a reporting module 15611 that can display the performance at the publisher's and/or advertiser's dashboard.

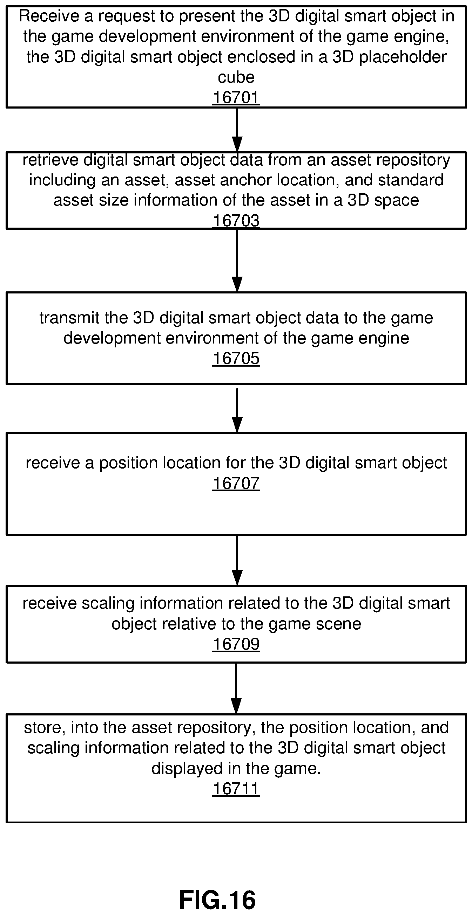

FIG. 16 illustrates the operations of displaying a 3D digital smart object in a game development environment. As illustrated, at 16701, 3D digital smart object placement system 108 receives a request to present the 3D digital smart object in the game development environment of the game engine, the 3D digital smart object enclosed in a 3D placeholder cube. At 16703, system 108 retrieves 3D digital smart object data from an asset repository including an asset, asset anchor location, and standard asset size information of the asset in a 3D space. At 16705, system 108 transmits the 3D digital smart object data to the game development environment of the game engine, and at 16707 system 108 receives a position location for the 3D digital smart object. At 16709, system 108 receives scaling information related to the 3D digital smart object relative to the game scene. At 16711, system 108 stores into the asset repository the position location, and scaling information related to the 3D digital smart object displayed in the game.

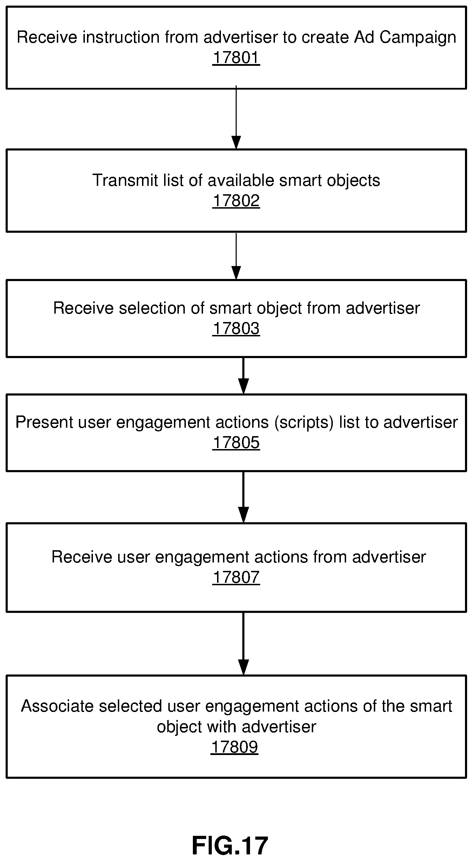

FIG. 17 illustrates the operations of receiving user engagement actions and viewability metrics related to a 3D digital smart object by a 3D digital smart object placement system, according to one embodiment of the present invention. At 17801, 3D digital smart object placement system 108 can receive an instruction from an advertiser to create Ad Campaign. At 17802, the system transmits a list 3D digital smart objects that are available to the advertiser. At 17803, the system can receive a selection of 3D digital smart object from advertiser. At 17805, the system present user engagement actions and viewability metrics (scripts) list to advertiser, and at 17807, the system receives user engagement actions and viewability metrics from advertiser. At 17809, system 108 associates selected user engagement actions of the 3D digital smart object with advertiser.

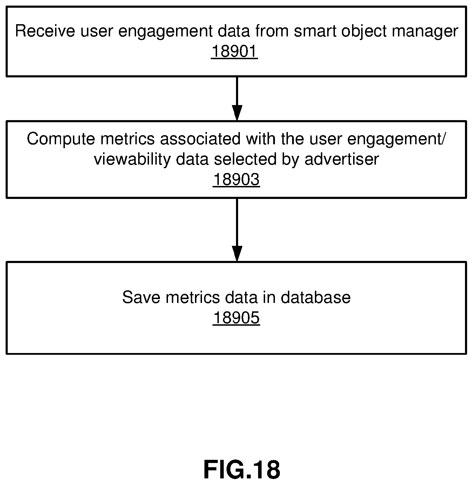

FIG. 18 illustrates the operations of receiving user engagement data by a 3D digital smart object processing system, according to one embodiment of the present invention. Once the 3D digital smart objects are viewed, or interacted with, by a user/player of the game, at 18901, 3D digital smart object processing system 110 can receive user engagement data and viewability metrics from 3D digital smart object manager. At 18903 system 110 can compute metrics associated with the user engagement data selected by advertiser and at 18905 system 110 can save metrics data in database.

Thus, methods, apparatuses, and computer readable medium to display and/or generate 3D digital smart objects in a three dimensional environment. Although the present invention has been described with reference to specific exemplary embodiments, it will be evident that various modifications and changes may be made to these embodiments without departing from the scope of the invention as set forth in the claims. Accordingly, the specification and drawings are to be regarded in an illustrative rather than a restrictive sense.

## Claims

1. A digital smart object generation system (106) to generate a three-dimensional (3D) digital smart object (101, 511) for use in an 3D environment, comprising a hardware processing system (1901) coupled to a memory device (1903), the hardware processing system (1901) configured to:
present a 3D placeholder (210D) to a publisher of the 3D environment via an Application Programing Interface (API) or a Software Development Kit (SDK) of the digital smart object generation system (106), **characterised in that** the publisher uploads an asset (210B) to use as a 3D geometrical representation of 3D digital smart object (101, 511), wherein the asset (210B) is a generic 3D representation of geometric data, and wherein the asset (210B) within the 3D placeholder (101, 511) provides a visual representation of the 3D digital smart object (101, 511) to be generated;
receive standard asset size information of the asset (210B) within the 3D placeholder (210D), the standard asset size information of the asset (210B) including an X-axis, Y-axis, and Z-axis dimension of the asset (210B), and wherein the 3D digital smart object (101) is associated with a maximum and minimum polygon count value, asset positioning information (411), and wherein 3D digital smart object (101) can also be associated with standard object size dimensions (413) receive the maximum and minimum polygon count value;
receive asset data, the asset data including asset category (212A) and asset type (212B) associated to the asset (210B);
receive an asset positioning information (411), the asset positioning information including an anchor location and an asset orientation, wherein the anchor location being at least one of the X-axis, Y-axis, Z-axis, or a combination thereof, of the 3D placeholder and wherein the asset orientation is the desired orientation of the asset selected by publisher;
store digital smart object data (122) including the asset (210B), standard asset size information, asset positioning information (411), the maximum and minimum polygon count value and asset data (407A, 407B) in a repository; and
generate the 3D digital smart object (101, 511) by using the digital smart object data (122);
wherein the 3D digital smart object (101, 511) is placed within the 3D environment and wherein the 3D digital smart object (101, 511) collects data related to user interaction or viewability with the 3D digital smart object (101, 511).

2. The system according to claim 1, **characterised in that** the hardware processing system is further configured to generate the 3D digital smart object (101, 511) by associating the digital smart object data with event triggers (417, 509), wherein the event triggers (417, 509) are capable of determining user interaction with the 3D digital smart object, **characterised in that** the event triggers (417, 509) transmits data based on the user interaction that is used to generate user viewability or interaction based metrics.

3. The system according to claim 2, **characterised in that** at least one event trigger (417, 509) is configured by the publisher, and wherein at least another of the event trigger (417, 509) is configured by an advertiser.

4. The system according to claim 2, **characterised in that** the event triggers (509) transmit user interaction including determining at least one of a user looking at the 3D smart object (101, 511), the user interacting with the 3D smart object (101, 511), a distance between the user and the 3D smart object (101, 511) , a percentage size of the 3D smart object (101, 511) in relationship to the size of the user interface, the percentage of the 3D smart object (101, 511) that was viewed on the user's screen, or a period of time that the user interacted with the 3D smart object (101, 511) .

5. The system according to claim 1, **characterised in that** the asset (210B) being a generic 3D representation of geometric data, wherein the asset (210B) within the 3D placeholder (210D) provides a visual representation of the 3D digital smart object (101, 511).

6. The system according to claim 1, **characterised in that** an advertiser can replace the asset (210B) with a branded object (501, 502), the branded object (501, 502) related to a brand associated with the advertiser, and wherein the branded object (501, 502) can replace the asset only when the branded object (501, 502) has a polygon count within the defined minimum and maximum polygon count value, the minimum and maximum polygon count value defined by a publisher.

7. The system according to claim 6, **characterised in that** the publisher can further identify the types of different branded objects (501, 502) that can replace the asset (210B) based on an asset category and asset type.

8. The system according to claim 1, further configured to: receive standard asset size information of the asset (210B) in a 3D space, the standard asset size information including an X-axis, Y-axis, and Z-axis dimension of the asset, **characterised in that** the standard asset size information provides the maximum 3D size of the asset (210B) relative to the 3D placeholder (210D), and wherein the standard asset size information is determined when at least one of the X-axis, Y-axis, or Z-axis dimension of the asset (210B) equals to its corresponding axis dimension of the 3D placeholder (210D).

9. A computer readable medium storing instructions which when executed by a data processing system cause the data processing system to perform a method of using the system of any one of claims 1-8.

10. A method of using the system of any one of claims 1-8.

## Patentansprüche

1. System zur Erzeugung digitaler intelligenter Objekte (106) zur Erzeugung eines dreidimensionalen (3D) digitalen intelligenten Objekts (101, 511) zur Verwendung in einer 3D-Umgebung, das ein Hardware-Verarbeitungssystem (1901) umfasst, das mit einer Speichervorrichtung (1903) gekoppelt ist, wobei das Hardware-Verarbeitungssystem (1901) dafür konfiguriert ist:
einem Herausgeber der 3D-Umgebung über eine Anwendungsprogrammierschnittstelle (API) oder ein Software Development Kit (SDK) des System zur Erzeugung digitaler intelligenter Objekte (106) einen 3D-Platzhalter (210D) zu präsentieren, **dadurch gekennzeichnet, dass** der Herausgeber ein Asset (210B) hochlädt, um es als eine geometrische 3D-Darstellung eines digitalen intelligenten 3D-Objekts (101, 511) zu verwenden, wobei das Asset (210B) eine generische 3D-Darstellung geometrischer Daten ist, und wobei das Asset (210B) innerhalb des 3D-Platzhalters (101, 511) eine visuelle Darstellung des zu erzeugenden digitalen intelligenten 3D-Objekts (101, 511) bereitstellt;
Standard-Asset-Größeninformationen des Assets (210B) innerhalb des 3D-Platzhalters (210D) zu empfangen, wobei die Standard-Asset-Größeninformationen des Assets (210B) eine X-Achsen-, Y-Achsen- und Z-Achsen-Dimension des Assets (210B) umfassen, und wobei das digitale intelligente 3D-Objekt (101) mit einem maximalen und minimalen Polygonzahlwert, Informationen (411) zur Positionierung des Assets zugeordnet ist, und wobei das digitale intelligente 3D-Objekt (101) auch Standardobjektgrößenmaßen (413) zugeordnet werden kann;
den maximalen und minimalen Polygonzahlwert zu empfangen;
Asset-Daten zu empfangen, wobei die Asset-Daten eine dem Asset (210B) zugeordnete Asset-Kategorie (212A) und einen Asset-Typ (212B) umfassen;
eine Information (411) zur Positionierung des Assets zu empfangen, wobei die Information zur Positionierung des Assets einen Ankerort und eine Ausrichtung des Assets umfasst, wobei der Ankerort mindestens einer der X-Achse, Y-Achse, Z-Achse oder einer Kombination davon des 3D-Platzhalters ist, und wobei die Ausrichtung des Assets die gewünschte Ausrichtung des vom Herausgeber ausgewählten Assets ist;
Daten (122) des digitalen intelligenten Objekts zu speichern, einschließlich des Assets (210B), Standard-Asset-Größeninformationen, Informationen (411) zur Positionierung des Assets, dem maximalen und minimalen Polygonzahlwert und Asset-Daten (407A, 407B), in einem Repository; und
das digitale intelligente 3D-Objekt (101, 511) unter Verwendung der Daten (122) des digitalen intelligenten Objekts zu erzeugen;
wobei das digitale intelligente 3D-Objekt (101, 511) in der 3D-Umgebung platziert wird, und wobei das digitale intelligente 3D-Objekt (101, 511) Daten sammelt, die sich auf die Interaktion des Benutzers oder die Sichtbarkeit des digitalen intelligenten 3D-Objekts (101, 511) beziehen.

2. System nach Anspruch 1, **dadurch gekennzeichnet, dass** das Hardware-Verarbeitungssystem ferner zum Erzeugen des digitalen intelligenten 3D-Objekts (101, 511) durch Verknüpfen der Daten des digitalen intelligenten Objekts mit Ereignisauslösern (417, 509) konfiguriert ist, wobei die Ereignisauslöser (417, 509) in der Lage sind, die Benutzerinteraktion mit dem digitalen intelligenten 3D-Objekt zu bestimmen, **dadurch gekennzeichnet, dass** die Ereignisauslöser (417, 509) Daten basierend auf der Benutzerinteraktion übertragen, die verwendet werden, um auf der Sichtbarkeit oder Interaktion des Benutzers basierende Metriken zu erzeugen.

3. System nach Anspruch 2, **dadurch gekennzeichnet, dass** mindestens ein Ereignisauslöser (417, 509) vom Herausgeber konfiguriert wird, und wobei mindestens ein anderer der Ereignisauslöser (417, 509) von einem Werbetreibenden konfiguriert wird.

4. System nach Anspruch 2, **dadurch gekennzeichnet, dass** die Ereignisauslöser (509) eine Benutzerinteraktion übertragen, einschließlich der Bestimmung von mindestens einem der folgenden Ereignisse: ein Benutzer das intelligente 3D-Objekt (101, 511) betrachtet, der Benutzer mit dem intelligenten 3D-Objekt (101, 511) interagiert, ein Abstand zwischen dem Benutzer und dem intelligenten 3D-Objekt (101, 511), eine prozentuale Größe des intelligenten 3D-Objekts (101, 511) im Verhältnis zur Größe der Benutzerschnittstelle, der Prozentsatz des intelligenten 3D-Objekts (101, 511), der auf dem Bildschirm des Benutzers angezeigt wurde, oder ein Zeitraum, in dem der Benutzer mit dem intelligenten 3D-Objekt (101, 511) interagiert hat.

5. System nach Anspruch 1, **dadurch gekennzeichnet, dass** das Asset (210B) eine generische 3D-Darstellung geometrischer Daten ist, wobei das Asset (210B) innerhalb des 3D-Platzhalters (210D) eine visuelle Darstellung des digitalen intelligenten 3D-Objekts (101, 511) bereitstellt.

6. System nach Anspruch 1, **dadurch gekennzeichnet, dass** ein Werbetreibender das Asset (210B) durch ein Markenobjekt (501, 502) ersetzen kann, wobei das Markenobjekt (501, 502) mit einer mit dem Werbetreibenden verbundenen Marke in Zusammenhang steht, und wobei das Markenobjekt (501, 502) das Asset nur ersetzen kann, wenn die Polygonzahl des Markenobjekts (501, 502) innerhalb des definierten den maximalen und minimalen Polygonzahlwert liegt, wobei der maximale und minimale Polygonzahlwert von einem Herausgeber definiert wird.

7. System nach Anspruch 6, **dadurch gekennzeichnet, dass** der Herausgeber ferner die Typen verschiedener Markenobjekte (501, 502) identifizieren kann, die das Asset (210B) basierend auf einer Asset-Kategorie und einem Asset-Typ ersetzen können.

8. System nach Anspruch 1, das ferner zum Empfangen von Standard-Asset-Größeninformationen des Assets (210B) in einem 3D-Raum konfiguriert ist, wobei die Standard-Asset-Größeninformationen eine X-Achsen-, Y-Achsen- und Z-Achsen-Dimension des Assets umfassen, **dadurch gekennzeichnet, dass** die Standard-Asset-Größeninformationen die maximale 3D-Größe des Assets (210B) relativ zum 3D-Platzhalter (210D) bereitstellen, und wobei die Standard-Asset-Größeninformationen bestimmt wird, wenn mindestens eine der X-Achsen-, Y-Achsen- oder Z-Achsen-Dimension des Assets (210B) gleich der entsprechenden Achsendimension des 3D-Platzhalters (210D) ist.

9. Computerlesbares Medium, das Anweisungen speichert, die, wenn sie von einem Datenverarbeitungssystem durchgeführt werden, das Datenverarbeitungssystem dazu veranlassen, ein Verfahren zur Verwendung des Systems nach einem der Ansprüche 1-8 durchzuführen.

10. Verfahren zur Verwendung des Systems nach einem der Ansprüche 1-8.

## Revendications

1. Système de génération d'objet intelligent numérique (106) pour générer un objet intelligent numérique tridimensionnel (3D) (101, 511) à utiliser dans un environnement 3D, comprenant un système de traitement matériel (1901) couplé à un dispositif de mémoire (1903), le système de traitement matériel (1901) configuré pour :
présenter un espace réservé 3D (210D) à un éditeur de l'environnement 3D par l'intermédiaire d'une interface de programmation d'application (API) ou d'un kit de développement logiciel (SDK) du système de génération d'objet intelligent numérique (106), **caractérisé en ce que** l'éditeur télécharge un actif (210B) à utiliser comme représentation géométrique 3D d'objet intelligent numérique 3D (101, 511), dans lequel l'actif (210B) est une représentation 3D générique de données géométriques, et dans lequel l'actif (210B) dans l'espace réservé 3D (101, 511) fournit une représentation visuelle de l'objet intelligent numérique 3D (101, 511) à générer ;
recevoir des informations de taille standard d'actif de l'actif (210B) dans l'espace réservé 3D (210D), les informations de taille standard d'actif de l'actif (210B) comportant une dimension d'axe X, d'axe Y et d'axe Z de l'actif (210B), et dans lequel l'objet intelligent numérique 3D (101) est associé à une valeur maximale et minimale de nombre de polygones, des informations de positionnement d'actif (411), et dans lequel l'objet intelligent numérique 3D (101) peut également être associé à des dimensions de taille standard d'objet (413) ;
recevoir la valeur maximale et minimale de nombre de polygones ;
recevoir des données d'actif, les données d'actif comportant une catégorie d'actif (212A) et un type d'actif (212B) associés à l'actif (210B) ;
recevoir des informations de positionnement d'actif (411), les informations de positionnement d'actif comportant un emplacement d'ancrage et une orientation d'actif, l'emplacement d'ancrage étant au moins l'un parmi l'axe X, l'axe Y, l'axe Z, ou une combinaison de ceux-ci, de l'espace réservé 3D et l'orientation d'actif étant l'orientation souhaitée de l'actif sélectionnée par l'éditeur ;
stocker des données d'objet intelligent numérique (122) comportant l'actif (210B), des informations de taille standard d'actif, des informations de positionnement d'actif (411), la valeur maximale et minimale de nombre de polygones et des données d'actif (407A, 407B) dans un référentiel ; et
générer l'objet intelligent numérique 3D (101, 511) en utilisant les données d'objet intelligent numérique (122) ;
dans lequel l'objet intelligent numérique 3D (101, 511) est placé dans l'environnement 3D et dans lequel l'objet intelligent numérique 3D (101, 511) collecte des données liées à l'interaction ou à la visibilité de l'utilisateur avec l'objet intelligent numérique 3D (101, 511).

2. Système selon la revendication **1, caractérisé en ce que** le système de traitement matériel est en outre configuré pour générer l'objet intelligent numérique 3D (101, 511) en associant les données d'objet intelligent numérique à des déclencheurs d'événement (417, 509), dans lequel les déclencheurs d'événement (417, 509) sont capables de déterminer l'interaction de l'utilisateur avec l'objet intelligent numérique 3D, **caractérisé en ce que** les déclencheurs d'événement (417, 509) transmettent des données basées sur l'interaction de l'utilisateur qui sont utilisées pour générer des mesures basées sur la visibilité ou l'interaction de l'utilisateur.

3. Système selon la revendication 2, **caractérisé en ce qu'**au moins un déclencheur d'événement (417, 509) est configuré par l'éditeur, et dans lequel au moins un autre déclencheur d'événement (417, 509) est configuré par un annonceur.

4. Système selon la revendication 2, **caractérisé en ce que** les déclencheurs d'événement (509) transmettent une interaction de l'utilisateur comportant la détermination d'au moins un utilisateur regardant l'objet intelligent 3D (101, 511), l'utilisateur interagissant avec l'objet intelligent 3D (101, 511), une distance entre l'utilisateur et l'objet intelligent 3D (101, 511), une taille en pourcentage de l'objet intelligent 3D (101, 511) par rapport à la taille de l'interface utilisateur, le pourcentage de l'objet intelligent 3D (101, 511) qui a été visualisé sur l'écran de l'utilisateur, ou une période pendant laquelle l'utilisateur a interagi avec l'objet intelligent 3D (101, 511).

5. Système selon la revendication 1, **caractérisé en ce que** l'actif (210B) est une représentation 3D générique de données géométriques, dans lequel l'actif (210B) dans l'espace réservé 3D (210D) fournit une représentation visuelle de l'objet intelligent numérique 3D (101, 511).

6. Système selon la revendication 1, **caractérisé en ce qu'**un annonceur peut remplacer l'actif (210B) par un objet de marque (501, 502), l'objet de marque (501, 502) étant lié à une marque associée à l'annonceur, et dans lequel l'objet de marque (501, 502) peut remplacer l'actif uniquement lorsque l'objet de marque (501, 502) a un nombre de polygones dans la valeur minimale et maximale de nombre de polygones définie, la valeur minimale et maximale de nombre de polygones étant définie par un éditeur.

7. Système selon la revendication 6, **caractérisé en ce que** l'éditeur peut en outre identifier les types de différents objets de marque (501, 502) qui peuvent remplacer l'actif (210B) sur la base d'une catégorie d'actif et d'un type d'actif.

8. Système selon la revendication 1, configuré en outre pour : recevoir des informations de taille standard d'actif de l'actif (210B) dans un espace 3D, les informations de taille standard d'actif comportant une dimension d'axe X, d'axe Y et d'axe Z de l'actif, **caractérisé en ce que** les informations de taille standard d'actif fournissent la taille 3D maximale de l'actif (210B) par rapport à l'espace réservé 3D (210D), et dans lequel les informations standard de taille d'actif sont déterminées quand au moins l'une des dimensions d'axe X, d'axe Y ou d'axe Z de l'actif (210B) est égale à la dimension d'axe correspondante de l'espace réservé 3D (210D).

9. Support lisible par ordinateur, stockant des instructions qui, lorsqu'elles sont exécutées par un système de traitement des données, amènent le système de traitement des données à réaliser un procédé d'utilisation du système selon l'une quelconque des revendications 1 à 8.

10. Procédé d'utilisation du système selon l'une quelconque des revendications 1 à 8.
